# FASCICULE DE BREVET EUROPEEN

(11) **EP 4 337 937 B1**
(45) Date de publication et mention de la délivrance du brevet: **29.07.2026**
(21) Numéro de dépôt: 22717869.6
(22) Date de dépôt: 29.03.2022
(51) Int. Cl.: G01N 21/77, G01N 21/64

(54) **DISPOSITIF ÉLECTRONIQUE D'ANALYSE D'UN ANALYTE PRÉSENT DANS UN FLUIDE COMPORTANT UN CAPTEUR ET PROCÉDÉ DE REMPLACEMENT DU CAPTEUR**
ELEKTRONISCHE VORRICHTUNG ZUR ANALYSE EINES ANALYTEN IN EINER FLÜSSIGKEIT MIT EINEM SENSOR UND VERFAHREN ZUM AUSTAUSCHEN DES SENSORS
ELECTRONIC DEVICE FOR ANALYSING AN ANALYTE PRESENT IN A FLUID, COMPRISING A SENSOR, AND METHOD FOR REPLACING THE SENSOR

(30) Priorité: 11.05.2021 FR 2104992
(43) Date de publication de la demande: 20.03.2024
(73) Titulaire: Olfaktion, 75017 Paris (FR)
(72) Inventeur: CHAVIGNER, Thierry, 38000 Grenoble (FR); PADIOLLEAU, Vincent, 38000 Grenoble (FR)
(74) Mandataire: Plasseraud IP
(86) Numéro de dépôt international: PCT/FR2022/050586
(87) Numéro de publication internationale: WO 2022/238630

(56) Documents cités:
- EP-A1- 2 327 955
- EP-A2- 2 130 027
- US-A1- 2003 153 023
- US-A1- 2011 253 224
- US-A1- 2012 214 707

## Description

### Domaine technique

Le domaine de l'invention est celui des techniques de mesure et d'analyse physique, en particulier des techniques de mesure et d'analyse physique électroniques. La présente invention se rapporte plus particulièrement à un dispositif électronique d'analyse d'un analyte présent dans un fluide, le dispositif électronique d'analyse présentant un capteur. La présente invention se rapporte également à un procédé de remplacement du capteur.

### Technique antérieure

On connait des dispositifs d'analyse électronique permettant de détecter la présence d'un analyte dans un fluide tel qu'un gaz ou un liquide, de l'identifier, et éventuellement de mesurer sa concentration dans le fluide. L'analyte peut être la combinaison de composés cibles, par exemple un mélange de COV (Composés organiques volatils) pouvant produire une odeur. C'est la raison pour laquelle, ces dispositifs sont parfois classés dans les nez ou langues électroniques, selon qu'ils fonctionnent pour les gaz ou les liquides.

Le principe de détection dans ces dispositifs peut être fondé sur des interactions entre des récepteurs intégrés dans un capteur et l'analyte. Les interactions reposent sur des propriétés d'affinité physico-chimiques entre les récepteurs et l'analyte, et en particulier entre les récepteurs et les composés cibles de l'analyte. Ces interactions entrainent un changement d'une ou plusieurs propriétés locales, révélateur de la présence de l'analyte, voire de la quantité d'analyte présent.

Les récepteurs peuvent être choisis parmi divers composés ou matériaux propres à constituer un ligand temporaire pour les composés cibles. On citera de façon non exhaustive : des molécules particulières, des peptides, des polymères, des biomarqueurs, des nanoparticules, des nanotubes de carbone. Les forces de liaison en jeu sont des forces faibles en général (type Van Der Walls).

Un transducteur est généralement utilisé pour convertir ce changement de propriété locale en un signal électronique multidimensionnel représentatif de ce changement de propriété locale. Pour chaque récepteur, un signal électronique est généré. L'ensemble des signaux électroniques constitue le signal électronique multidimensionnel. Grâce au traitement et à l'analyse de ce signal électronique multidimensionnel, il est alors possible de faire une détermination qualitative, voire quantitative de l'analyte présent dans le fluide analysé.

Certains dispositifs d'analyse électronique permettent de détecter le changement de propriété locale à l'aide d'interférences lumineuses. Le dispositif d'analyse électronique comporte alors un capteur comportant un puce photonique avec un guide de lumière et un transducteur comportant une source de lumière cohérente pour émettre un faisceau lumineux cohérent dans le guide de lumière, et un détecteur optique pour mesurer au moins un paramètre optique du faisceau lumineux, à la sortie du guide de lumière.

Le guide de lumière est mis en forme pour permettre la formation d'interférences lumineuses, et les récepteurs sont intégrés dans le guide de lumière. Le changement de propriété locale généré par l'interaction entre l'analyte et les récepteurs dans le guide de lumière vient créer des interférences lumineuses. Ces interférences lumineuses dépendent donc des interactions entre l'analyte et les récepteurs, et sont donc spécifiques de l'analyte analysé.

Les interférences lumineuses créées modifient le paramètre optique mesuré par le détecteur optique. Ainsi, à partir du paramètre optique mesuré par le détecteur optique, le transducteur peut générer un signal électronique exprimant le changement de propriété locale, et donc révélant l'analyte.

Pour que le détecteur optique puisse mesurer correctement le paramètre optique du faisceau lumineux, la source de lumière et le guide de lumière doivent être alignés. Cet alignement permet que la quantité de lumière entrant dans le guide de lumière soit suffisante pour que le détecteur optique puisse détecter le paramètre optique du faisceau lumineux à la sortie du guide de lumière, et qu'ainsi, le signal électronique généré par le transducteur exprime le changement de propriété locale, et que le transducteur permette de détecter la présence de l'analyte. L'alignement entre la source de lumière et le guide de lumière est ainsi un primordial pour la détermination qualitative, voire quantitative de l'analyte présent dans le fluide analysé.

Toutefois, les récepteurs utilisés pour interagir avec l'analyte sont des récepteurs temporaires, c'est-à-dire qu'ils ont une durée de vie plus limitée que les autres composants du dispositif. En effet, l'interaction entre les récepteurs et l'analyte peut conduire à une saturation des récepteurs. Or, lorsque les récepteurs sont saturés, ceux-ci ne peuvent plus interagir correctement avec l'analyte du fluide. Le capteur intégrant les récepteurs doit alors être remplacé.

Les récepteurs peuvent également être spécifiques d'un type d'analyte que l'on souhaite détecter. En effet, les récepteurs peuvent présenter une affinité particulière avec un type d'analyte donné. Ainsi, si on souhaite changer de type d'analyte à détecter, il peut devenir nécessaire de remplacer le capteur par un autre capteur dont les récepteurs seront adaptés à la détection du nouveau type d'analyte que l'on souhaite détecter.

On comprend donc que pour limiter les coûts, il est préférable de pouvoir remplacer le capteur dans le dispositif plutôt que de devoir changer tout le dispositif, lorsque les récepteurs temporaires ne fonctionnent plus ou que l'on souhaite détecter un autre analyte.

Lorsque le capteur est remplacé, il faut veiller à ce que le guide de lumière du nouveau capteur soit aligné avec la source de lumière du dispositif. Pour l'utilisateur qui effectue le remplacement du capteur, veiller au bon alignement de la source de lumière et de l'entrée du guide de lumière, est long et fastidieux.

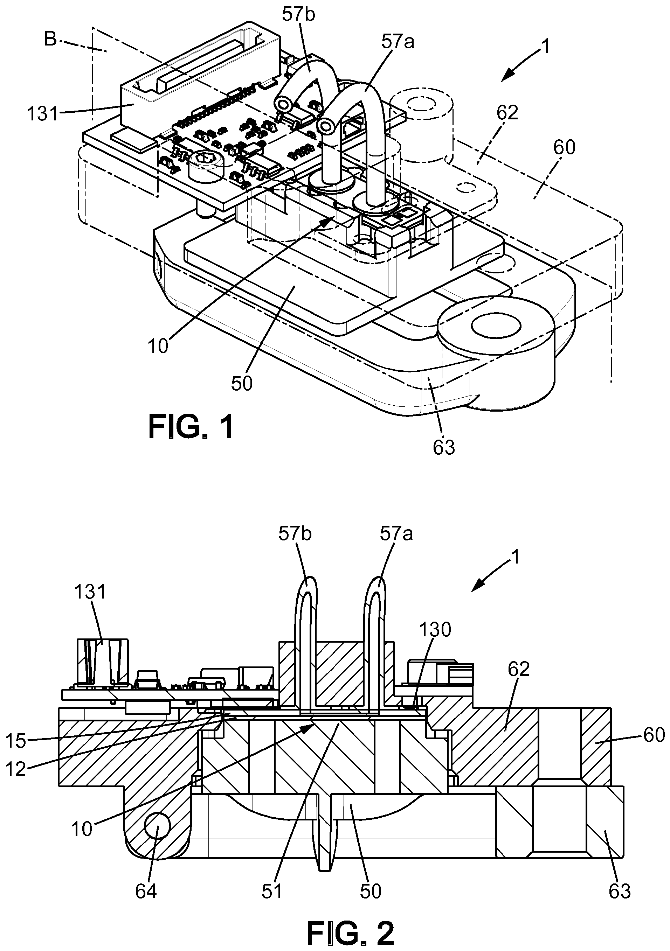

US20120214707A1 est une demande de brevet qui divulgue un procédé et un système de mesure pour la détection d'un analyte dans un échantillon SAM de fluide (vapeur, gaz § [0002]). Ce système comprend un capteur interférométrique, dans lequel le faisceau lumineux provenant d'un laser LSO est couplé à une structure de guide d'ondes optique (canal) WGS. La structure de guide d'ondes WGS est constituée de trois couches, à savoir le substrat SUB, la couche de cœur COR et la couche de couverture COV (figures 1A & 1B). Le dispositif (bio)capteur comprend un système de mesure (portable) POD et un système Lab-On-Chip (LOC). Le LOC comprend une entrée INL, une alimentation en fluide (cuvette (micro-)fluidique FCV), une partie de détection SRG comprenant les régions de mesure (pré-revêtues de récepteurs REC) et de référence et une sortie OTL pour évacuer le fluide ou évacuer l'air ou un autre gaz suite à l'alimentation de l'échantillon dans la partie de détection. Le système peut être interchangeable. La connexion fluidique avec le système LOC peut être agencée de manière à permettre une interchangeabilité rapide, par exemple, elle peut être configurée comme une unité modulaire, qui peut être rapidement positionnée lors de l'insertion du système LOC dans le système POD. Cette configuration peut être préférée en combinaison avec une méthode d'auto-alignement pour permettre un couplage plus rapide et meilleur du faisceau de lumière (laser) dans la puce de guide d'ondes optiques, après l'insertion du système LOC dans le système POD. En outre, les couches de récepteurs REC utilisées pour pré-revêtir la puce peuvent être mieux préservées dans un tel système intégré et fermé. Un tel système fermé peut protéger les récepteurs, tels que des anticorps, d'une détérioration (rapide) et peut également empêcher la contamination des régions/fenêtres de détection après le processus de pré-revêtement et avant l'application des échantillons d'analyte. Ce système fermé de protection des récepteurs REC est constitué par le POD. Un détecteur, par exemple une caméra CCD, qui est comprise dans le POD (et non pas sur le POD) permet de lire les signaux optiques de mesure, provenant du capteur interférométrique.

EP2327955A1 décrit un système de détection optique pour des essais biologiques à haute sensibilité sans marquage comprenant un système de mesure optique (100) et un élément (200) de réception d'un fluide ayant de multiples analytes, ledit élément comprenant une pluralité de cellules biosensibles (201). Le système de mesure optique (100) comprend au moins une source d'excitation (101), une tête optique (103, 103a, 103b), agencée pour analyser chacune desdites cellules biosensibles et les analytes qu'elles contiennent, et des moyens optiques pour la détection (102) d'un signal provenant de la tête optique (103, 103a, 103b). Chaque cellule biosensible comprend : un substrat (55), une pluralité de cavités résonantes (53), chaque cavité étant définie par l'un desdits micropiliers dont la base repose sur le substrat de telle sorte que l'espace entre les micropiliers accueille le fluide à analyser, une pluralité de réflecteurs de Bragg, au moins deux par cavité résonante (53), situés respectivement à chaque extrémité du micropilier, et une pluralité de récepteurs moléculaires (54) fixés sur les surfaces latérales des micropiliers de manière à être en contact avec le fluide. Ce système de bio-détection sans marquage vise à être compétitif en termes de commercialisation industrielle, de sensibilité, de cadence de mesure, de robustesse et de coût, en combinant plusieurs méthodes de détections (« *by combining the interferometric and resonant advantages of novel photonic structures with optical interrogation techniques such as spectrometry, ellipsometry* as *well [*...*] interrogation process* », paragraphe [0001] ), dont notamment les techniques d'interrogation optique verticales.

Un but de l'invention est donc de fournir un dispositif électronique d'analyse compact et intégré, dans lequel le capteur est consommable et interchangeable, et dans lequel l'alignement entre la source de lumière et l'entrée du guide de lumière, n'est pas laissé à l'utilisateur qui effectue le remplacement du capteur.

Un autre but de l'invention est de fournir un dispositif électronique d'analyse compact et intégré, qui minimise, voire empêche, une détermination qualitative, voire quantitative, erronée d'un analyte présent dans un fluide analysé.

Un autre but de l'invention est de fournir un dispositif électronique d'analyse compact et intégré, dans lequel la détection par le détecteur d'un changement de propriété locale généré par l'interaction entre les récepteurs et l'analyte est garantie, afin que le signal électronique généré par le transducteur corresponde à l'interaction effective entre les récepteurs et l'analyte.

Un autre but de l'invention est de garantir que le paramètre optique du faisceau lumineux mesuré par le détecteur optique puisse révéler le changement de propriété locale.

### Résumé

La présente invention vise à répondre au besoin évoqué ci-dessus.

A cet effet, l'invention, selon un premier aspect, prévoit un dispositif électronique d'analyse d'un analyte présent dans un fluide caractérisé en ce qu'il comprend :
- un capteur consommable et interchangeable comportant
   i) une puce photonique comprenant au moins une chambre de mesure comportant un guide de lumière dans lequel sont disposés des récepteurs temporaires aptes à avoir une interaction avec l'analyte présent dans le fluide, l'interaction provoquant un changement de propriété locale, le guide de lumière comportant une entrée de lumière et une sortie de lumière et
   ii) un capot solidarisé à la puce photonique et comprenant une ouverture adaptée pour admettre le fluide dans la chambre de mesure et pour évacuer le fluide de la chambre de mesure ;
- un support de capteur comportant un logement dans lequel le capteur est destiné à être mis en place de manière réversible ;
- un élément de fermeture coopérant avec le support de capteur pour encapsuler le capteur ;
- un transducteur de changement de propriété locale provoqué par l'interaction entre les récepteurs et l'analyte apte à convertir le changement de propriété locale en un signal électronique exprimant le changement de propriété locale, ce transducteur comportant :
- une source de lumière cohérente, d'une part, apte à émettre un faisceau lumineux cohérent dans le guide de lumière de la puce photonique, et, d'autre part, positionnée sur la capot du capteur ou sur l'élément de fermeture;
- un détecteur optique agencé en regard de la sortie de lumière du guide de lumière et apte à mesurer un paramètre optique du faisceau lumineux dépendant du changement de propriété locale, à la sortie du guide de lumière.

Le capteur est consommable et mis en place de façon réversible. Ainsi, le capteur peut être changé sans avoir à changer tous les autres composants du dispositif.

De plus, grâce au positionnement de la source de lumière sur le capot du capteur ou sur l'élément de fermeture, l'utilisateur qui effectue le remplacement du capteur n'a pas besoin de se préoccuper de l'alignement de la source de lumière avec l'entrée du guide de lumière lors du remplacement du capteur.

En effet, lorsque la source de lumière est positionnée sur le capot du capteur, au cours du remplacement du capteur, la source de lumière est retirée avec le capteur et une nouvelle source de lumière positionnée sur le capot du nouveau capteur est alors introduite dans le dispositif au moment de l'intégration du nouveau capteur dans le logement du support de capteur. Ainsi, l'alignement entre la source de lumière et l'entrée de lumière du guide de lumière est laissée à la charge du fabricant du capteur qui positionne lui-même la source de lumière sur le capot.

En conséquence, selon un premier mode de réalisation de l'invention dans lequel la source de lumière est positionnée sur le capot du capteur, l'alignement entre la source de lumière et l'entrée de lumière du guide de lumière, est réalisée lors de la fabrication du dispositif selon l'invention.

Par ailleurs, selon un 2^{e} mode de réalisation de l'invention dans lequel la source de lumière est positionnée sur l'élément de fermeture, l'alignement entre la source de lumière et l'entrée du guide de lumière est effectué par la mise en place du capteur dans le logement du support et par la coopération entre l'élément de fermeture et le support, au moment de l'encapsulation du capteur. Ainsi, lorsque le capteur est remplacé, la source de lumière reste sur l'élément de fermeture, et l'alignement entre la source de lumière et l'entrée de lumière du guide de lumière est garanti par le référencement, conçu par le fabricant, de l'élément de fermeture par rapport au support de capteur.

Selon une variante, le guide de lumière comprend au moins une branche comportant un bras de référence dans lequel une partie du faisceau lumineux émis par la source de lumière est destiné à être guidé par réflexion interne totale, et un bras de mesure dans lequel une autre partie du faisceau lumineux émis par la source de lumière est destiné à être guidé par réflexion interne totale et dans lequel sont disposés les récepteurs, le bras de référence et le bras de mesure étant recombinés en un bras d'interférence dans lequel un faisceau lumineux résultant issu de la recombinaison de la partie du faisceau lumineux guidé dans le bras de référence et de l'autre partie du faisceau lumineux guidé dans le bras de mesure est destiné à être guidé, et
la puissance lumineuse du faisceau lumineux résultant guidé dans le bras d'interférence est supérieure ou égale à 0,2 µW.

En imposant une puissance minimale du faisceau lumineux résultant à 0.2 µW, cela permet de s'assurer qu'une quantité suffisante de lumière passe dans le guide de lumière, pour que le détecteur puisse mesurer le paramètre optique du faisceau lumineux en sortie du guide de lumière.

De plus, cette puissance minimale du faisceau lumineux résultant permet de garantir que, lorsque le paramètre optique du faisceau lumineux est modifié en raison du changement de propriété locale, cette modification peut être mesurée par le détecteur optique. En particulier, le détecteur optique est ainsi sensible à la variation de la valeur du paramètre optique engendrée par le changement de propriété locale, et donc par la présence de l'analyte. Ainsi, le signal électronique généré par le transducteur exprime bien le changement de propriété locale. La détermination qualitative, voire quantitative, de l'analyte présent dans le fluide analysé est correctement effectuée.

Selon une variante, le dispositif électronique d'analyse comporte une pluralité de branches, chaque branche comportant un bras de référence et un bras de mesure qui se recombinent en un bras d'interférence. Par exemple, le dispositif électronique d'analyse comporte 64 branches. La précision de détection de la détermination de l'analyte est alors améliorée puisque le faisceau lumineux résultant de chaque branche est mesuré. Chaque branche apporte une détection qui lui est propre, et le faisceau lumineux mesuré par le détecteur optique en sortie de guide est impacté par chaque branche.

Selon une variante, le bras d'interférence de chaque branche possède une première extrémité reliée au bras de référence et au bras de mesure, et une deuxième extrémité par laquelle le faisceau lumineux résultant est destiné à être issu. La deuxième extrémité forme ainsi la sortie de lumière du guide de lumière. Lorsque le guide de lumière comporte plusieurs branches, la sortie de lumière du guide de lumière est formée par la deuxième extrémité de chaque bras d'interférence. Ainsi, le faisceau lumineux en sortie du guide de lumière est formé par l'ensemble des faisceaux lumineux résultants guidés dans les bras d'interférence.

Selon une variante, le bras d'interférence de chaque branche est divisé à sa deuxième extrémité en trois sous-bras, le faisceau lumineux résultant étant séparé et guidé dans chacun de ces trois sous-bras et les trois sous-bras étant configurés pour déphaser le faisceau lumineux résultant de 120° entre chacun des sous-bras. Autrement dit, le bras d'interférence est divisé en un premier sous-bras recevant une première partie du faisceau lumineux résultant et configuré pour déphaser la première partie du faisceau lumineux résultant de 0° par rapport au faisceau lumineux résultant, c'est-à-dire, ne pas déphaser la première partie du faisceau lumineux résultant, un deuxième sous-bras recevant une deuxième partie du faisceau lumineux résultant et configuré pour déphaser la deuxième partie du faisceau lumineux résultant de 120° par rapport au faisceau lumineux résultant et un troisième sous-bras recevant une troisième partie du faisceau lumineux résultant et configuré pour déphaser la troisième partie du faisceau lumineux résultant de 240° par rapport au faisceau lumineux résultant.

La sortie de lumière du guide de lumière est alors formée par l'ensemble des trois sous-bras. La puissance lumineuse du faisceau lumineux résultant correspond alors à la somme des puissances lumineuses en sortie de chacun des trois sous-bras, c'est-à-dire à la somme des puissances lumineuses de la première partie du faisceau lumineux résultant, de la deuxième partie du faisceau lumineux résultant et de la troisième partie du faisceau lumineux résultant.

Lorsque le guide de lumière comporte plusieurs branches, la sortie de lumière du guide de lumière est formée par l'ensemble des trois sous-bras de chaque bras d'interférence. Ainsi, le faisceau lumineux en sortie du guide de lumière est formé par l'ensemble des parties des faisceaux lumineux résultants guidées dans les sous-bras de chaque bras d'interférence.

Selon une variante, le capot comprend une surface supérieure agencée en regard de l'élément de fermeture, et le faisceau lumineux émis par la source de lumière a un axe d'émission sensiblement perpendiculaire à la surface supérieure du capot.

L'incidence perpendiculaire du faisceau lumineux à la surface supérieure du capot permet de faciliter l'intégration de la source de lumière au dispositif électronique d'analyse, en particulier lorsque la source de lumière est positionnée sur le capot. De plus, cela facilite l'alignement entre la source de lumière et l'entrée du guide de lumière. Ainsi, les coûts de fabrication du dispositif électronique d'analyse sont diminués.

Selon une variante, les récepteurs de la chambre de mesure sont choisis parmi des molécules, des peptides, des polymères, des biomarqueurs, des nanoparticules ou des nanotubes de carbone

Selon une variante, l'analyte est une combinaison de composés cibles, par exemple des composés organiques volatiles, contenus dans le fluide, de préférence, l'analyte est un mélange de composés organiques volatiles caractéristique d'une odeur contenue dans le fluide.

Selon une variante, le détecteur optique est positionné sur l'élément de fermeture.

Le raccord de l'alimentation électrique du détecteur optique est alors facilité.

Selon une première alternative, la source de lumière est positionnée sur le capot du capteur, et le dispositif électronique d'analyse comprend
- des pistes électroniques gravées sur le capot sur lesquelles est disposée la source de lumière,
- un circuit électronique sur l'élément de fermeture, et
- un contacteur électrique permettant de connecter les pistes électroniques au circuit électronique pour alimenter la source de lumière.

La source de lumière peut ainsi être facilement alimentée en énergie via le circuit électronique et les pistes électroniques.

Par exemple, le connecteur électrique est une broche Pogo^{®}.

Selon une deuxième alternative, la source de lumière est positionnée sur l'élément de fermeture, et le dispositif électronique d'analyse comprend un système optique qui comporte de préférence au moins une lentille, et qui est destiné à collimater le faisceau lumineux.

L'angle d'incidence du faisceau lumineux à l'entrée du guide de lumière est ainsi mieux contrôlé.

Selon une variante, le capteur comprend une protection des récepteurs temporaires configurée pour être active avant la mise en place du capteur dans le logement du support de capteur et être désactivée par la mise en place du capteur dans le logement du support de capteur.

Les récepteurs temporaires qui forment la partie sensible du dispositif sont ainsi protégés par la protection. Les récepteurs temporaires sont ainsi isolés de l'atmosphère extérieure avant que le capteur ne soit mis en place dans le support de capteur, et ne sont pas altérés avant d'être utilisés dans le dispositif. Cette protection est mise en place juste après la fabrication, et est donc en place pendant le stockage du capteur et jusqu'à l'intégration du capteur dans le dispositif électronique d'analyse où les récepteurs temporaires ne sont plus soumis à un risque de pollution exogène. La protection des récepteurs temporaires est obtenue sans préjudice pour la facilité de mise en place et de retrait du capteur dans le dispositif, ni pour la qualité de l'analyse.

En outre, lorsque le capteur est mis en place dans le logement du support de capteur, la coopération entre la protection des récepteurs temporaires et le support de capteur permet à la protection des récepteurs temporaires d'être désactivée. Le fluide peut alors circuler dans la chambre de mesure du capteur, et atteindre les récepteurs temporaires. Ainsi, la désactivation de la protection garantit une utilisation optimale du capteur et des récepteurs temporaires.

Selon une variante, la protection des récepteurs temporaires comprend une enveloppe protectrice configurée pour :
- obturer l'ouverture du capot avant la mise en place du capteur dans le logement du support de capteur, et
- coopérer avec l'élément de fermeture de sorte à se perforer en regard de l'ouverture du capot lorsque le capteur est mis en place dans le logement du support de capteur.

Selon une variante, l'élément de fermeture comporte une paroi périphérique réversiblement emboitable avec le support de capteur.

Cet agencement entre la paroi périphérique et le support de capteur permet d'optimiser l'alignement entre l'élément de fermeture et le support de capteur. Lorsque la source de lumière est positionnée sur l'élément de fermeture, l'emboitement entre la paroi périphérique de l'élément de fermeture et le support de capteur permet de garantir l'alignement entre la source de lumière et l'entrée du guide de lumière.

Selon une variante, l'élément de fermeture comprend une prise de connexion en communication fluidique avec l'ouverture du capot pour permettre l'admission et l'évacuation du fluide dans la chambre de mesure.

Le fluide peut ainsi être admis par l'élément de fermeture, au travers la prise de connexion.

Selon une variante, l'ouverture du capot comporte une ouverture d'admission configurée pour admettre le fluide dans la chambre de mesure et une ouverture d'évacuation configurée pour évacuer le fluide de la chambre de mesure.

Le fluide à analyser peut ainsi circuler entre l'ouverture d'admission et l'ouverture d'évacuation pendant la mesure.

Selon une variante, la prise de connexion de l'élément de fermeture comprend un conduit d'admission du fluide en communication fluidique avec l'ouverture d'admission du capot et un conduit d'évacuation du fluide en communication fluidique avec l'ouverture d'évacuation du capot.

Selon une variante, le conduit d'admission, respectivement le conduit d'évacuation comporte une embase avec une surface de contact agencée en regard de l'ouverture d'admission, respectivement de l'ouverture d'évacuation, qui s'étend de part et d'autre de l'ouverture d'admission, respectivement de l'ouverture d'évacuation, afin de garantir l'étanchéité de la chambre de mesure.

L'embase permet d'assurer un bon contact entre le conduit d'admission et le conduit d'évacuation et la chambre de mesure afin de garantir une étanchéité entre les conduits d'admission et d'évacuation et le capot du capteur. De plus, elle permet de faciliter l'alignement entre le conduit d'admission et l'ouverture d'admission d'une part, et le conduit d'évacuation et l'ouverture d'évacuation d'autre part.

Selon une variante, le changement de propriété locale est un changement d'indice optique dans le capteur.

Selon une variante, le paramètre optique est l'intensité lumineuse ou la puissance lumineuse.

Selon un deuxième aspect, l'invention prévoir un procédé de remplacement d'un capteur d'un dispositif électronique d'analyse selon le premier aspect de l'invention, dans lequel
- le capteur est retiré du logement du support de capteur,
- un nouveau capteur est positionné dans le logement du support de capteur.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] La figure 1 représente un dispositif électronique d'analyse selon un premier mode de réalisation de l'invention comportant un capteur, un support de capteur, un élément de fermeture et un transducteur.
**Fig. 2**
   [Fig. 2] La figure 2 représente une vue en coupe du dispositif électronique d'analyse de la figure 1 selon un plan longitudinal.
**Fig.3**

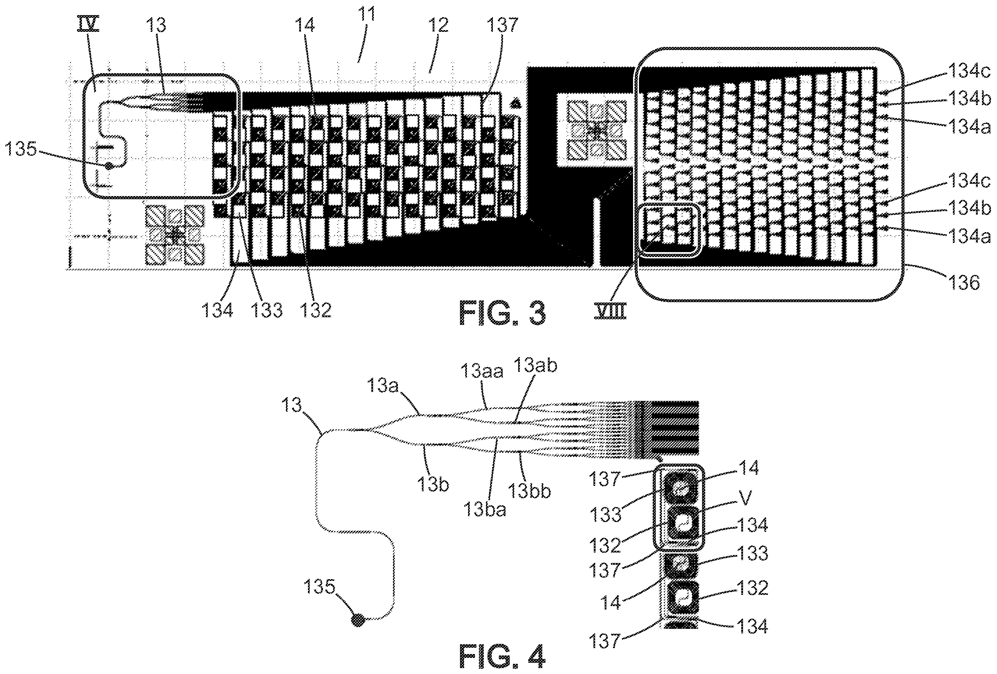

   [Fig. 3] La figure 3 représente une vue de dessus d'une puce photonique du capteur du dispositif électronique d'analyse représenté à la figure 1, comportant une chambre de mesure comportant un guide de lumière.
**Fig. 4**
   [Fig. 4] La figure 4 montre une vue agrandie de la zone référencée IV sur la figure 3 représentant une partie du guide de lumière située à proximité de l'entrée de lumière du guide de lumière.
**Fig. 5**

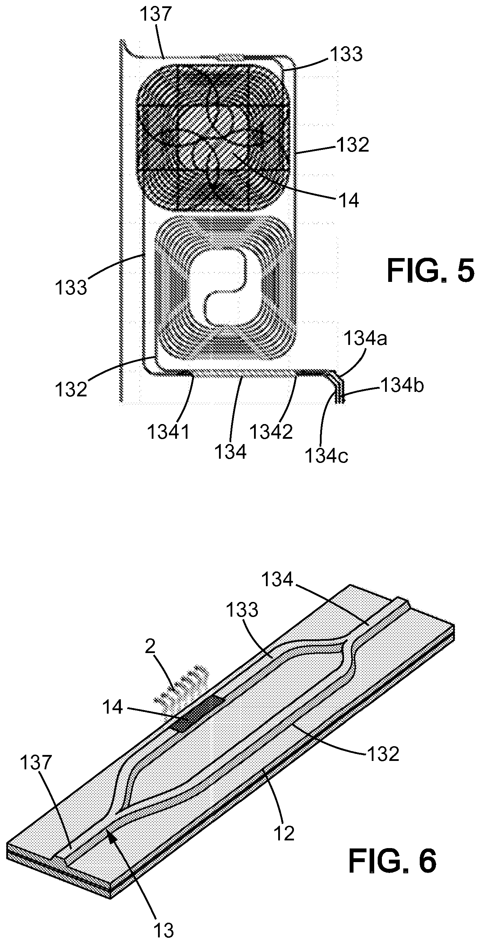

   [Fig. 5] La figure 5 montre une vue agrandie de la zone référencée V sur la figure 4 représentant une branche du guide de lumière avec un bras de référence et un bras de mesure.
**Fig. 6**
   [Fig. 6] La figure 6 illustre schématiquement une branche du guide de lumière avec un bras de référence et un bras de mesure dans lequel des récepteurs sont intégrés.
**Fig. 7**

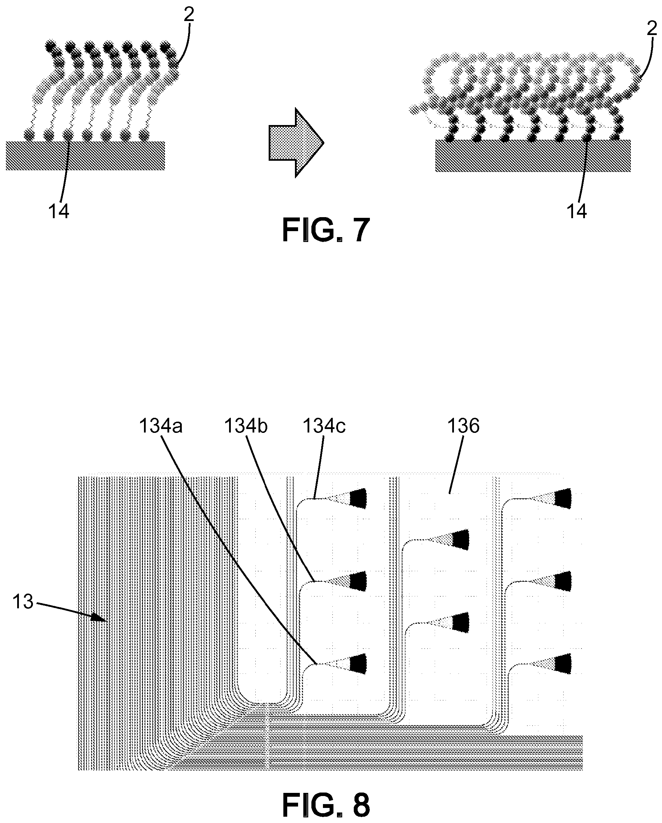

   [Fig. 7] La figure 7 illustre schématiquement la réaction entre les récepteurs et un analyte à analyser.
**Fig. 8**
   [Fig. 8] La figure 8 montre une vue agrandie de la zone référencée VIII sur la figure 3 représentant une partie de la sortie de lumière du guide de lumière.
**Fig. 9**

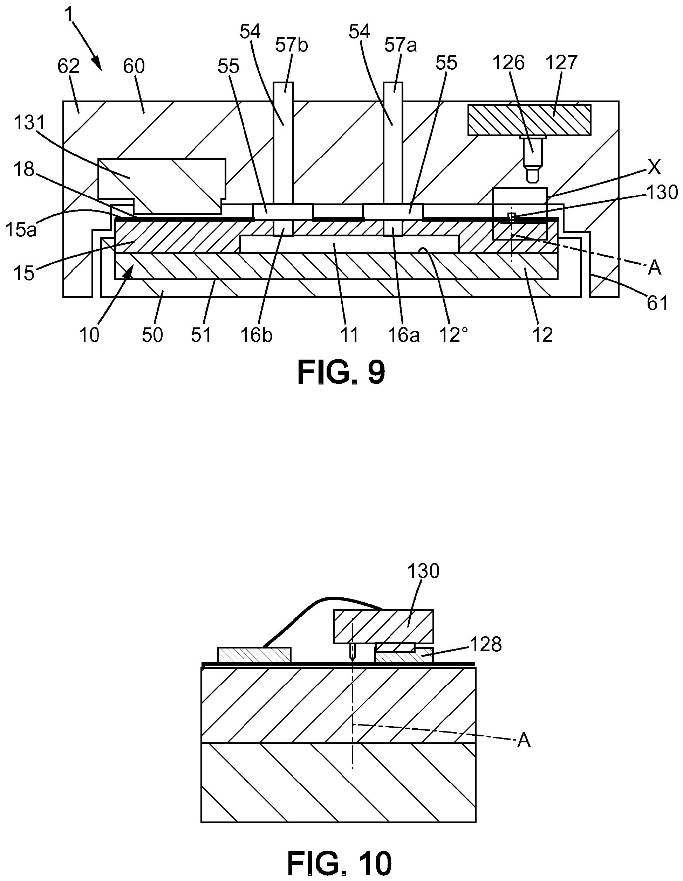

   [Fig. 9] La figure 9 représente une vue en coupe schématique du dispositif électronique d'analyse de la figure 1, configuré selon le premier mode de réalisation, selon un plan longitudinal, dans lequel la source de lumière du transducteur est positionnée sur le capot du capteur.
**Fig. 10**
   [Fig. 10] La figure 10 représente une vue agrandie de la zone référencée X sur la figure 9, comportant la source de lumière.
**Fig. 11**

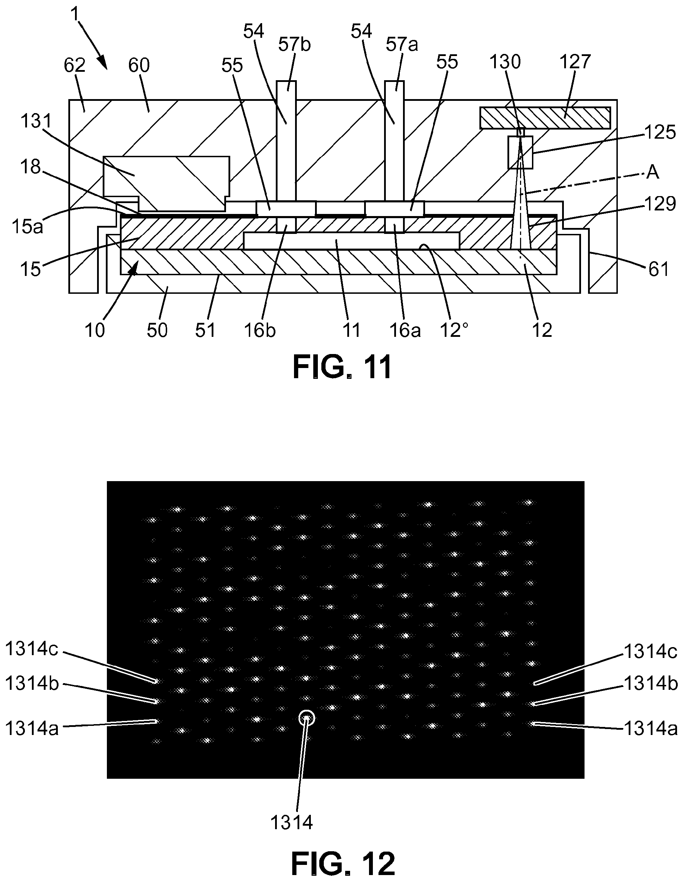

   [Fig. 11] La figure 11 représente une vue en coupe schématique similaire à celle de la figure 9 d'un dispositif électronique d'analyse configuré selon un deuxième mode de réalisation, dans lequel la source de lumière du transducteur est positionnée sur l'élément de fermeture.
**Fig. 12**
   [Fig. 12] La figure 12 représente une image formée par le détecteur optique du transducteur.
**Fig. 13**

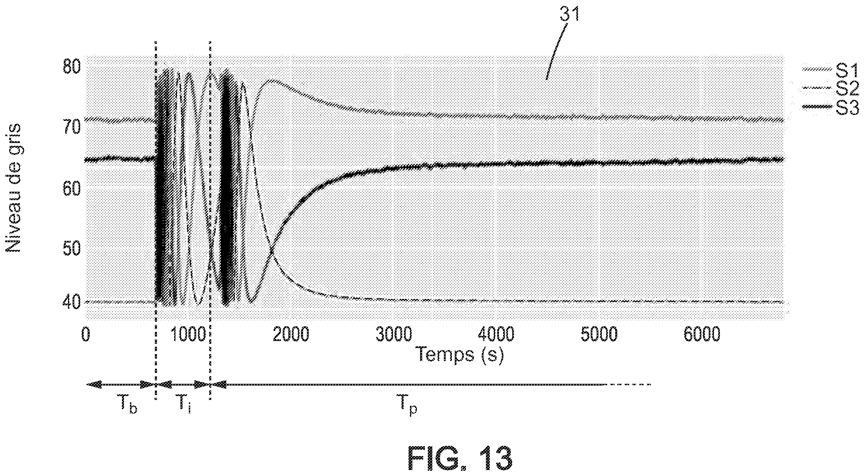

   [Fig. 13] La figure 13 représente un graphique montrant des signaux électriques formés par le transducteur.
**Fig. 14**

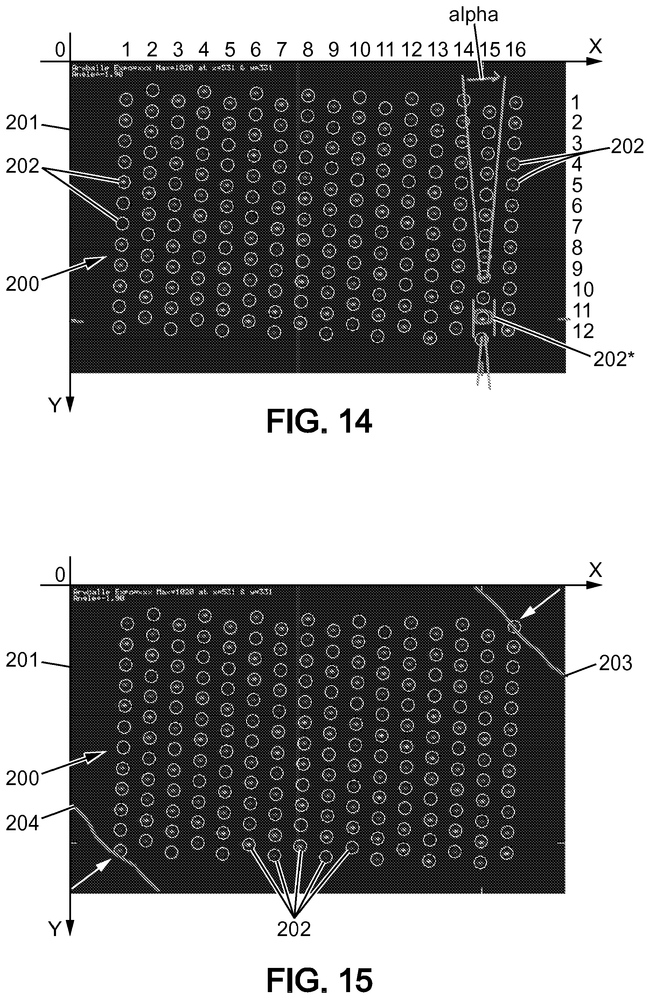

   [Fig. 14] La figure 14 illustre la 3^{e} méthode de calibration selon l'invention, sur une image formée par le détecteur optique du transducteur.
**Fig. 15**
   [Fig. 15] La figure 15 illustre une variante de la 3^{e} méthode de calibration selon l'invention, sur une image formée par le détecteur optique du transducteur.
**Fig. 16**

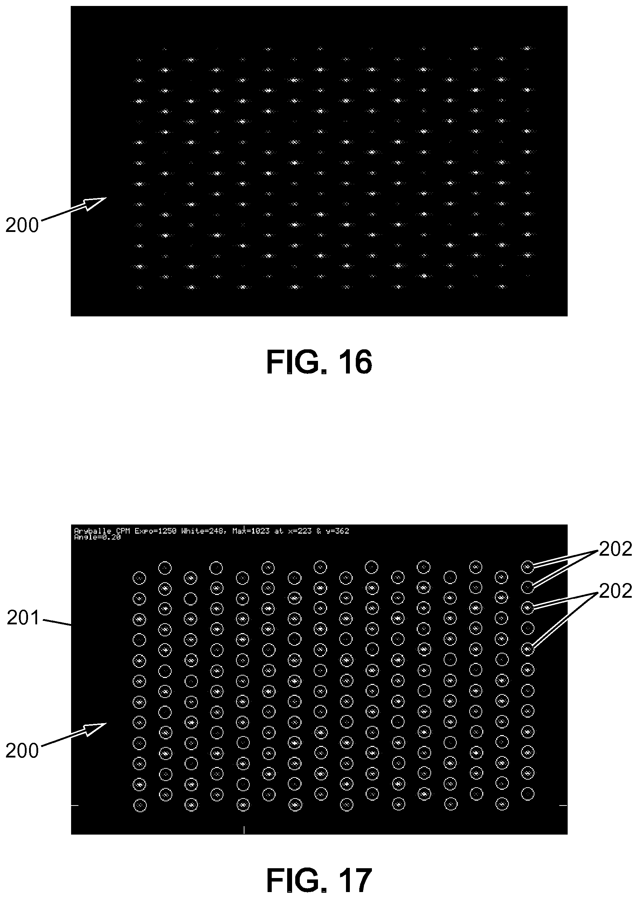

   [Fig. 16] La figure 16 représente une image formée par le détecteur optique du transducteur, non calibrée selon les 1^{ère} , 2^{e} et 3^{e} méthodes de calibration selon l'invention.
**Fig. 17**
   [Fig. 17] La figure 17 représente une image formée par le détecteur optique du transducteur, calibrée selon les 1^{ère} , 2^{e} et 3^{e} méthodes de calibration selon l'invention.
**Fig. 18**

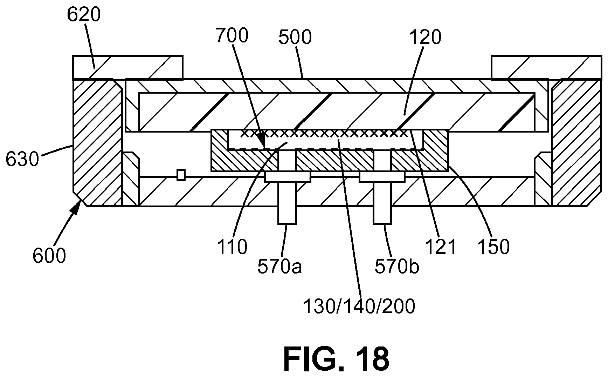

   [Fig. 18] La figure 18 représente une vue en coupe schématique similaire à celle de la figure 9 ou 11 d'un dispositif électronique d'analyse configuré selon une variante de réalisation, dans lequel le capot définissant la chambre de mesure est disposée en dessous de la puce photonique.

### Description des modes de réalisation

Sur les figures, les mêmes références désignent des éléments identiques ou analogues.

La figure 1 représente un dispositif électronique d'analyse 1 selon un premier mode de réalisation de l'invention. Une vue en coupe selon un plan longitudinal B illustré à la figure 1 du dispositif électronique d'analyse 1 est également représentée à la figure 2, et une vue en coupe schématique selon le plan longitudinal B illustré à la figure 1 du dispositif électronique d'analyse 1 est également représentée à la figure 9.

Le dispositif électronique d'analyse 1 comporte un capteur 10 consommable et interchangeable, et permet d'analyser un analyte 2 dont la présence dans un fluide à analyser est mise en évidence par le capteur 10. Le dispositif électronique d'analyse 1 permet ainsi de détecter la présence de l'analyte 2 dans le fluide à analyser, voire de déterminer la quantité d'analyte 2 dans le fluide à analyser.

Le fluide peut être un gaz ou un liquide. L'analyte 2 peut être une combinaison de composés cibles, par exemple des composés organiques volatiles, contenue dans le fluide. En particulier, l'analyte 2 peut être un mélange de composés organiques volatiles caractéristique d'une odeur contenue dans le fluide.

Le dispositif électronique d'analyse 1 comporte également un support de capteur 50 comportant un logement 51 dans lequel le capteur 10 est mis en place de manière réversible, et un élément de fermeture 60. En particulier, le support de capteur 50 comporte un renfoncement formant le logement 51. L'élément de fermeture 60 coopère avec le support de capteur 50 pour encapsuler le capteur 10. Le capteur 10 est ainsi protégé par le support de capteur 50 et l'élément de fermeture 60.

Dans l'exemple représenté, l'élément de fermeture 60 est formé par une pièce supérieure 62 agencée en regard du capteur 10 et une pièce inférieure agencée en regard du support de capteur 50. La pièce supérieure 62 et la pièce inférieure 63 sont reliées par l'intermédiaire d'une charnière 64. L'élément de fermeture 60 permet ainsi de venir protéger le capteur 10. Alternativement, l'élément de fermeture 60 pourrait être formé uniquement par la pièce supérieure 62.

Le capteur 10 comprend une puce photonique 12 visible sur les figures 2 et 9, et dont une vue de dessus est représentée à la figure 3. La puce photonique 12 comporte une chambre de mesure 11 permettant de mettre en évidence la présence de l'analyte 2 dans le fluide à analyser. Un guide de lumière 13, dans lequel sont disposés des récepteurs 14, est positionné dans la chambre de mesure 11, à la surface 12° de la puce photonique 12, en regard de la chambre de mesure 11. Cette surface 12° et ainsi fonctionnalisée par les récepteurs 14 peuvent avoir une interaction avec l'analyte 2 présent dans le fluide à analyser. L'interaction entre les récepteurs 14 et l'analyte 2 provoque un changement de propriété locale. Ainsi, lorsque les récepteurs 14 sont en présence de l'analyte 2, au moins une propriété locale caractéristique du milieu dans lequel sont positionnés les récepteurs 14 est modifiée. Dans l'exemple illustré, la propriété locale est l'indice optique du milieu.

Les récepteurs 14 peuvent être choisis parmi des molécules, des peptides, des polymères, des biomarqueurs, des nanoparticules ou des nanotubes de carbone. Les récepteurs 14 sont des récepteurs temporaires. Ils ont une durée de vie plus limitée que les autres composants du dispositif électronique d'analyse 1. En effet, les récepteurs 14 peuvent être saturés par l'interaction entre les récepteurs 14 et l'analyte 2. Par ailleurs, ils sont spécifiques à la détection d'un type d'analyte et doivent être changés lorsque l'analyte à détecter change.

Le guide de lumière 13 comprend une entrée de lumière 135 et une sortie de lumière 136.

Comme cela est visible à la figure 4 représentant une vue agrandie de la zone référencée IV sur la figure 3 montrant une partie du guide de lumière 13 située à proximité de l'entrée de lumière 135, et à la figure 5 représentant une vue agrandie de la zone référencée V sur la figure 4, le guide de lumière 13 est divisé en une pluralité de branches 137, chaque branche 137 étant divisée en un bras de référence 132 et un bras de mesure 133, dans lequel sont disposés les récepteurs 14. Le bras de référence 132 et le bras de mesure 133 se recombinent en un bras d'interférence 134.

La figure 6 représente schématiquement une branche 137 du guide de lumière 13, les récepteurs 14 étant disposés dans le bras de mesure 133, et interagissant avec l'analyte 2.

Afin de former les branches 137, le guide de lumière 13 est divisé successivement, à partir de l'entrée de lumière 135. En particulier, comme visible sur les figures 3 et 4, le guide de lumière 13 est divisé en deux portions de premier rang 13a, 13b de longueur identique constituant un premier étage du guide de lumière 13, puis chacune de ces portions de premier rang 13a, 13b est à son tour divisée en deux pour former quatre portions de deuxième rang 13aa, 13ab, 13ba, 13bb de longueur identique, constituant un deuxième étage du guide de lumière 13. Chaque portion de deuxième rang 13aa, 13ab, 13ba, 13bb est à son tour divisée en deux pour former huit portions de troisième rang de longueur identique constituant un troisième étage du guide de lumière 13, puis chaque portion de troisième rang est à son tour divisée en deux pour former seize portions de quatrième rang de longueur identique constituant un quatrième étage du guide de lumière 13, puis chaque portion de quatrième rang est à son tour divisée en deux pour former trente-deux portions de cinquième rang de longueur identique constituant un cinquième étage du guide de lumière 13, puis chaque portion de cinquième rang est à son tour divisée en deux pour former soixante-quatre portions de sixième rang constituant un sixième étage de guide de lumière 13. Ces soixante-quatre portions de sixième rang forment chacune une branche 137.

Ces divisions successives du guide de lumière permettent d'augmenter le nombre de branches 137 qui vont permettre de révéler la présence de l'analyte 2. Le guide de lumière 13 peut comporter plus ou moins de branches 137 que dans l'exemple illustré. Ainsi, le guide de lumière 13 peut comporter plus ou moins d'étages que dans l'exemple illustré. Par exemple, le guide de lumière 13 peut comporter cinq étages, le cinquième étage comporte alors trente-deux portions de cinquième rangs formant chacune une branche, ou sept étages, le septième étage comporte alors cent vingt-huit portions de septième rang formant chacune une branche.

Comme représenté sur la figure 5, le bras d'interférence 134 de chaque branche 137 possède une première extrémité 1341 reliée au bras de référence 132 et au bras de mesure 133, et une deuxième extrémité 1342. La sortie de lumière 136 du guide de lumière 13 est formée par la deuxième extrémité 1342 du bras d'interférence 134 de chaque branche 137.

Dans l'exemple illustré, le bras d'interférence 134 de chaque branche 137 est divisé à sa deuxième extrémité 1342 en un premier sous-bras 134a, un deuxième sous-bras 134b et un troisième sous-bras 134c. Comme illustré à la figure 3 et à la figure 8 représentant une vue agrandie de la zone référencée VIII sur la figure 3, la sortie de lumière 136 du guide de lumière 13 est ainsi formée par l'ensemble des trois sous-bras 134a, 134b, 134c de chacune des branches 137.

Le capteur 10 comprend également un capot 15 solidarisé à la puce photonique 12. Le capot 15 comprend une surface supérieure 15a agencée en regard de l'élément de fermeture 60. Le capot 15 comprend également une ouverture d'admission 16a permettant d'admettre le fluide à analyser dans la chambre de mesure 11 et une ouverture d'évacuation 16b permettant d'évacuer le fluide de la chambre de mesure 11. Le fluide peut ainsi circuler depuis l'ouverture d'admission 16a jusqu'à l'ouverture d'évacuation 16b.

L'ouverture d'admission 16a est positionnée à proximité d'une première extrémité de la chambre de mesure 11 et l'ouverture d'évacuation 16b est positionnée à proximité d'une deuxième extrémité de la chambre de mesure 11 permettant ainsi de garantir le passage du fluide au niveau des récepteurs 14. Dans une variante non représentée, le capot 15 pourrait comprendre une unique ouverture permettant à la fois d'admettre le fluide à analyser dans la chambre de mesure 11 et d'évacuer le fluide de la chambre de mesure 11.

L'élément de fermeture 60 comprend une prise de connexion 57a, 57b en communication fluidique avec l'ouverture du capot pour permettre l'admission et l'évacuation du fluide dans la chambre de mesure. La prise de connexion 57a, 57b de l'élément de fermeture 60 comprend un conduit d'admission 57a du fluide en communication fluidique avec l'ouverture d'admission 16a du capot 15 et un conduit d'évacuation 57b du fluide en communication fluidique avec l'ouverture d'évacuation 16b du capot 15. Le fluide à analyser peut ainsi être introduit dans l'ouverture d'admission 16a par l'intermédiaire du conduit d'admission 57a et être évacué de l'ouverture d'évacuation 16b par l'intermédiaire du conduit d'évacuation 57b.

Le conduit d'admission 57a, respectivement le conduit d'évacuation 57b comporte une embase 55 avec une surface de contact agencée en regard de l'ouverture d'admission 16a, respectivement de l'ouverture d'évacuation 16b, qui s'étend de part et d'autre de l'ouverture d'admission 16a, respectivement de l'ouverture d'évacuation 16b, afin de garantir l'étanchéité de la chambre de mesure 11. Les embases 55 permettent d'assurer un bon contact entre le conduit d'admission 57a et le conduit d'évacuation 57b d'une part, et la chambre de mesure 11 d'autre part, afin de garantir une étanchéité entre les conduits d'admission et d'évacuation 57a, 57b et le capot 15 du capteur 10. De plus, les embases 55 permettent de faciliter l'alignement entre le conduit d'admission 57a et l'ouverture d'admission 16a d'une part, et le conduit d'évacuation 57b et l'ouverture d'évacuation 16b d'autre part.

Le dispositif électronique d'analyse 1 comprend également un transducteur du changement de propriété locale provoqué par l'interaction entre les récepteurs temporaires 14 et l'analyte 2. Ce transducteur permet de convertir le changement de propriété locale en un signal électronique exprimant le changement de propriété locale.

Le transducteur comprend une source de lumière 130 cohérente et un détecteur optique 131. La source de lumière 130 peut par exemple être une diode laser. La source de lumière 130 est alignée avec l'entrée de lumière 135 de sorte que la source de lumière 130 puisse émettre un faisceau lumineux 129 cohérent dans le guide de lumière 13 de la puce photonique 12. Le faisceau lumineux 129 émis par la source de lumière 130 a un axe d'émission A sensiblement perpendiculaire à la surface supérieure 15a du capot 15. L'alignement entre la source de lumière 130 et l'entrée de lumière 135 du guide de lumière 13 est ainsi facilitée.

Alternativement, l'axe d'émission A du faisceau lumineux 129 pourrait former un angle non nul avec un axe perpendiculaire à la surface supérieure 15a du capot 15. Par exemple, l'angle peut être inférieur à 5°, voire inférieur à 1°.

Le détecteur optique 131 est positionné en regard de la sortie de lumière 136 du guide de lumière 13 et peut mesurer un paramètre optique du faisceau lumineux 129 dépendant du changement de propriété locale, à la sortie du guide de lumière 13. Par exemple, le détecteur optique 131 peut mesurer l'intensité lumineuse du faisceau lumineux 129 à la sortie du guide de lumière 13, ou la puissance lumineuse du faisceau lumineux 129 à la sortie du guide de lumière 13. Le détecteur optique 131 est positionné sur l'élément de fermeture 60.

Dans le premier mode de réalisation représenté aux figures 1, 2 et 9, la source de lumière 130 est positionnée sur le capot 15 du capteur 10. Comme le capteur 10 est consommable, interchangeable, et mis en place dans le logement 51 du support de capteur 50 de manière réversible, le capteur 10 peut facilement être remplacé, sans qu'il y ait besoin de changer les autres pièces du dispositif. Seule la source de lumière 130 qui est positionnée sur le capot 15 du capteur 10 est changée en même temps que le capteur 10.

Lors du remplacement du capteur 10 par un nouveau capteur, le nouveau capteur comprend également une source de lumière sur le capot. L'utilisateur qui effectue le remplacement n'a alors pas besoin de se préoccuper de l'alignement entre la source de lumière 130 et l'entrée de lumière 135 du guide de lumière 13 puisque l'alignement aura été effectué par le fabricant du nouveau capteur. Le fonctionnement du dispositif électronique d'analyse 1 est ainsi assuré après le remplacement du capteur 10.

Dans ce premier mode de réalisation, la source de lumière 130 est disposée sur des pistes électroniques 128 gravées sur le capot 15 et qui sont visibles sur la figure 10, et l'élément de fermeture 60 comporte un circuit électronique 127. Un contacteur électrique 126 permet de connecter les pistes électroniques 128 au circuit électronique 127, pour alimenter la source de lumière 130. Par exemple, le connecteur électrique 127 est une broche Pogo^{®}.

Selon un deuxième mode de réalisation représenté à la figure 11, la source de lumière 130 est positionnée sur l'élément de fermeture 60. Comme le capteur 10 est consommable, interchangeable, et mis en place dans le logement 51 du support de capteur 50, de manière réversible, le capteur 10 peut facilement être remplacé, sans qu'il y ait besoin de changer les autres pièces du dispositif. Contrairement au premier mode de réalisation, la source de lumière 130 peut également être conservée lors du changement du capteur 10.

De plus, lors du remplacement du capteur 10 par un nouveau capteur, l'alignement entre la source de lumière 130 et l'entrée du guide de lumière 135 du nouveau capteur est assurée par la coopération du support de capteur 50 et de l'élément de fermeture 60. En effet, le nouveau capteur est positionné dans le logement 51 du support de capteur 50, et l'élément de fermeture 60 est également référencé par rapport au support de capteur 50. Ainsi, grâce à la conception du support de capteur 50 et de l'élément de fermeture 60, l'alignement entre la source de lumière 130 et l'entrée de lumière 135 du guide de lumière 13 est assurée. L'alignement entre la source de lumière 130 et l'entrée de lumière 135 du guide de lumière 13 est laissée à la charge du fabricant du dispositif, et non à l'utilisateur qui effectue le remplacement.

Un système optique 125 est disposé en regard de la source de lumière 130 pour collimater le faisceau lumineux 129 émis par la source de lumière 130. Par exemple, le système optique 125 comporte au moins une lentille. Dans une variante, le dispositif électronique d'analyse 1 pourrait être dépourvu de système optique, et le faisceau lumineux 129 émis par la source de lumière 130 pourrait être envoyé directement dans l'entrée de lumière 135 du guide de lumière 13.

Dans ce deuxième mode de réalisation, la source de lumière 130 est alimentée directement par le circuit électronique 127 de l'élément de fermeture 60.

Ce deuxième mode de réalisation diffère du premier mode de réalisation uniquement par le positionnement de la source de lumière 130 dans le dispositif électronique d'analyse 1 et l'alimentation de la source de lumière 130. Les autres caractéristiques du dispositif électronique d'analyse 1 sont identiques à celles du premier mode de réalisation.

Dans chacun des premier et deuxième modes de réalisation, pour effectuer le changement de capteur 10, le capteur 10 est tout d'abord retiré du logement 51 du support de capteur 50, puis le nouveau capteur est positionné dans le logement 51 du support de capteur 50.

De plus, dans chacun des premier et deuxième modes de réalisation, l'élément de fermeture 60 comporte une paroi périphérique 61 réversiblement emboitable avec le support de capteur 50, ce qui permet d'accéder facilement au capteur 10. De plus, cet emboitement contribue au bon alignement de l'élément de fermeture 60 avec le support de capteur 50, et donc, pour le deuxième mode de réalisation, au bon alignement entre la source de lumière 130 et l'entrée de lumière 135 du guide de lumière 13.

De plus, le capteur 10 comprend une protection des récepteurs 14 temporaires configurée pour être active avant la mise en place du capteur dans le logement 51 du support de capteur 10 et être désactivée par la mise en place du capteur 10 dans le logement 51 du support de capteur 50.

Cette protection des récepteurs 14 temporaires est visible aux figures 9 et 11, et comprend une enveloppe protectrice 18 obturant l'ouverture d'admission 16a et l'ouverture d'évacuation 16b du capot 15 avant la mise en place du capteur 10 dans le logement 51 du support de capteur 50. Lorsque le capteur 10 est mis en place dans le logement 51 du support de capteur 50, l'enveloppe protectrice 18 coopère avec l'élément de fermeture 60, de sorte à se perforer en regard de l'ouverture d'admission 16a et l'ouverture d'évacuation 16b du capot 15.

La suite de la description décrit la propagation du faisceau lumineux 129 émis par la source de lumière 130 dans le dispositif électronique d'analyse 1, et en particulier dans le guide de lumière 13. Cette propagation est identique pour l'ensemble des modes de réalisation qui ont été décrits.

Une fois le faisceau lumineux 129 émis par la source de lumière 130, le faisceau lumineux 129 entre dans le guide de lumière 13 par l'entrée de lumière 135

Par exemple, la puissance lumineuse du faisceau lumineux 129 à l'entrée du guide de lumière est supérieure ou égale à 1 mW.

Le faisceau lumineux 129 est ensuite guidé dans le guide de lumière 13. En particulier, le faisceau lumineux 129 est divisé à chaque étage du guide de lumière 13 pour se propager dans chacune des portions constituant l'étage. Le faisceau lumineux se propage alors dans chacune des branches 137 du guide de lumière 13.

Dans chaque branche 137 du guide de lumière 13, une partie du faisceau lumineux est guidé par réflexion interne totale dans le bras de référence 132, et une autre partie du faisceau lumineux est guidé par réflexion interne totale dans le bras de mesure 133. On entend par « guidé par réflexion interne totale » que lorsque le faisceau lumineux se propage dans le guide de lumière 13, et qu'il rencontre la surface du guide de lumière 13, aucune partie du faisceau lumineux n'est réfractée, le faisceau lumineux est entièrement réfléchi.

Un faisceau lumineux résultant issu de la recombinaison de la partie du faisceau lumineux guidé dans le bras de référence 132 et de l'autre partie du faisceau lumineux guidé dans le bras de mesure 133 est guidé dans le bras d'interférence 134.

Chaque branche 137 du guide de lumière 130 forme un interféromètre permettant de détecter la présence d'un analyte 2 dans le fluide. En effet, lorsque le fluide à analyser entre dans la chambre de mesure 11, les récepteurs temporaires 14 présents dans chacun des bras de mesure 133 des branches 137 du guide de lumière 13 vont interagir avec l'analyte 2. Comme cela est visible à la figure 7, l'analyte 2 va par exemple s'accrocher aux récepteurs 14. L'interaction entre les récepteurs 14 et l'analyte 2 va alors modifier l'indice optique dans le bras de mesure 133. Cette modification de l'indice optique dans le bras de mesure 133 va générer un retard de phase dans le faisceau lumineux guidé dans le bras de mesure 133 alors que la phase du faisceau lumineux guidé dans le bras de référence 132 n'est pas modifiée.

Lorsque le faisceau lumineux issu du bras de mesure 133 et le faisceau lumineux issu du bras de référence 132 sont recombinés dans le bras d'interférence 134, et forment le faisceau lumineux résultant, des interférences spécifiques du retard de phase pris par le faisceau lumineux guidé dans le bras de mesure 133 sont formées dans le faisceau lumineux résultant. Ces interférences sont responsables d'une distribution d'intensité lumineuse spécifique. Cette distribution d'intensité lumineuse spécifique est ensuite détectée par le détecteur optique 131.

De manière générale, dans le dispositif selon l'invention, les faisceaux lumineux résultants qui sont issus des bras d'interférence 134 des branches, ces bras d'interférence étant éventuellement au moins une fois divisés en sous-bras, produisent une matrice de distributions (points) d'intensité lumineuse spécifiques (ci-après dénommées "distributions"), dans le détecteur optique, chaque distribution étant de préférence représentée par une tache lumineuse en niveau de gris. Cette matrice de distributions s'inscrit dans une image, de préférence rectangulaire, telle que celle représentée sur la figure 12, pour illustrer un exemple de détection qui est décrit ci-après.

Dans l'exemple illustré, le faisceau lumineux résultant de chaque branche 137 est séparé et guidé dans chacun de trois sous-bras 134a, 134b, 134c formant la deuxième extrémité du bras d'interférence 134. Chacun de ces trois sous-bras déphase le faisceau lumineux résultant, de sorte que le déphasage entre chaque sous-bras soit égal à 120°. Autrement dit, le premier sous-bras 134a reçoit une première partie du faisceau lumineux résultant et déphase la première partie du faisceau lumineux résultant de 0° par rapport au faisceau lumineux résultant, c'est-à-dire, que le premier sous-bras 134a n'est pas déphasé par la première partie du faisceau lumineux résultant, le deuxième sous-bras 134b reçoit une deuxième partie du faisceau lumineux résultant et déphase la deuxième partie du faisceau lumineux résultant de 120° par rapport au faisceau lumineux résultant et le troisième sous-bras 134c reçoit une troisième partie du faisceau lumineux résultant et déphase la troisième partie du faisceau lumineux résultant de 240° par rapport au faisceau lumineux résultant.

Le déphasage du faisceau lumineux résultant en trois parties de faisceau lumineux résultant déphasées de 120° permet au détecteur optique 131 d'obtenir plus de précision sur les interférences formées dans le faisceau lumineux résultant. En particulier, le détecteur optique 131 peut ainsi détecter le signe du déphasage du faisceau lumineux dans le bras de mesure 133. Or, comme ce déphasage est dû à l'interaction entre les récepteurs 14 et l'analyte 2, obtenir le signe du déphasage permet une meilleure détection de l'analyte 2.

La puissance lumineuse du faisceau lumineux résultant guidé dans le bras d'interférence 134 de chaque branche 137 est supérieure ou égale à 0,2 µW, ce qui permet au détecteur optique 131 de détecter la distribution d'intensité spécifique générée dans le faisceau lumineux résultant de chaque branche 137.

La puissance lumineuse du faisceau lumineux résultant correspond à la somme des puissances lumineuses en sortie de chacun des trois sous-bras 134a, 134b, 134c du bras d'interférence 134. Autrement dit, la puissance lumineuse du faisceau lumineux résultat correspond à la somme des puissances lumineuses de la première partie du faisceau lumineux résultant, de la deuxième partie du faisceau lumineux résultant et de la troisième partie du faisceau lumineux résultant du faisceau lumineux résultant.

Un exemple de détection effectuée par le détecteur optique 131 est présenté sur la figure 12. Pour chaque branche 137 du guide optique 13, et plus précisément, pour chaque sous-bras 134a, 134b, 134c du bras d'interférence 134 de chaque branche 137, le détecteur optique 131 reçoit une distribution d'intensité lumineuse spécifique. Chaque distribution d'intensité lumineuse spécifique est représentée par une tache lumineuse 1314a, 1314b, 1314c en niveau de gris. Pour chaque branche 137, la distribution d'intensité lumineuse spécifique du premier sous-bras 134a est représentée par une tache lumineuse 1314a, la distribution d'intensité lumineuse spécifique du deuxième sous-bras 134b est représentée par une tache lumineuse 1314b, et la distribution d'intensité lumineuse spécifique du troisième sous-bras 134c est représentée par une tache lumineuse 1314c.

La puissance lumineuse de chaque faisceau lumineux résultant correspond à la puissance lumineuse de trois taches lumineuses 1314a, 1314b, 1314c représentant respectivement la distribution d'intensité lumineuse spécifique de la première partie du faisceau lumineux résultant, de la deuxième partie du faisceau lumineux résultant et de la troisième partie du faisceau lumineux résultant du faisceau lumineux résultant.

Le niveau de gris de chaque tache lumineuse 1314a, 1314b, 1314c peut être compris entre 0 et 255. Plus le niveau de gris est élevé, plus la tache lumineuse est claire.

Afin d'optimiser la détection effectuée par le détecteur optique 131, le détecteur est, de préférence calibré au cours de la première utilisation du capteur 10.

Plusieurs méthodes de calibration du détecteur optique sont envisageables dans le cadre de l'invention, notamment pour tous les modes de réalisation du dispositif selon l'invention décrits dans le présent exposé et dans lesquels chaque distribution d'intensité lumineuse, constituant l'image dans le détecteur optique, est représentée par une tache lumineuse en niveau de gris.

On décrit ci-après à titre d'exemples, une 1^{ère} méthode de calibration par référence à la tache lumineuse ayant le plus haut niveau de gris, une 2^{e} méthode de calibration pour tenir compte de la qualité de l'alignement entre la source de lumière 130 et l'entrée de lumière 135 du guide de lumière 13 et une 3^{e} méthode de calibration pour localiser les distributions (points) d'intensité lumineuse émis par le guide de lumière 13.

### 1^{ère} Méthode de calibration du détecteur optique par référence à la tache lumineuse ayant le plus haut niveau de gris

Cette calibration est avantageusement faite avant la première détection, mais peut, de préférence, servir ensuite pour toutes les acquisitions du capteur. La calibration peut aussi être rappelé à tout moment par automatisme ou par l'utilisateur, pour ajuster les valeurs de sortie.

Il est préférable que le capteur ne soit pas saturé, mais qu'il puisse tout de même détecter les distributions d'intensité lumineuse spécifiques. Ainsi, au moins lors de la première détection du détecteur optique 131, la tache lumineuse 1314 ayant le niveau de gris le plus élevé est prise comme référence, et le temps d'exposition du détecteur optique 131, c'est-à-dire la durée pendant laquelle le détecteur optique 131 effectue la mesure des distributions d'intensité lumineuse spécifiques, est modifiée de sorte que cette tache lumineuse référente 1314 ait un niveau de gris prédéterminé ou compris dans une plage de niveaux de gris prédéterminée.

En d'autres termes, cette 1^{ère} méthode de calibration, avantageusement mise en oeuvre par ordinateur, au moins lors de la première détection, consiste essentiellement à:
(i.1) à identifier la tache lumineuse ayant le niveau de gris le plus élevé, sur la matrice de distributions (points) faite de taches lumineuses en niveaux de gris, contenues dans une image qui se forme dans le détecteur optique;
(ii.1) à prendre pour référence cette tache lumineuse;
(iii.1) à ajuster le temps d'exposition du détecteur optique, c'est-à-dire la durée pendant laquelle le détecteur optique effectue la mesure des distributions d'intensité lumineuse spécifique, de telle sorte que la tache lumineuse référente ait un niveau de gris Ng au moins égal à un niveau de gris prédéterminé Ng°, ou compris dans une plage de niveau de gris [Ng¹_- Ng²].

La présente invention a ainsi pour autre objet un dispositif électronique d'analyse d'un analyte présent dans un fluide, ledit dispositif étant équipé de moyens permettant que s'opère cette 1^{ère} méthode de calibration, au cours de l'analyse.

Par exemple, si le niveau de gris de la tache lumineuse référente 1314 est inférieur au niveau de gris prédéterminé Ng° ou à la valeur la plus basse Ng¹de la plage [Ng¹ - Ng²] de niveaux de gris prédéterminée, le temps d'exposition du détecteur optique 131 va être augmenté afin que le détecteur optique 131 puisse recevoir plus de lumière sur la durée de la mesure. Au contraire, si le niveau de gris de la tache lumineuse référente 1314 est supérieur au niveau de gris prédéterminé Ng° ou à la valeur la plus haute Ng² de la plage [Ng¹ - Ng²] de niveaux de gris prédéterminée, le temps d'exposition du détecteur optique 131 va être diminué afin que le détecteur optique 131 reçoive moins de lumière sur la durée de la mesure.

Toutefois, il est préférable que le temps d'exposition du détecteur optique 131 ne dépasse pas un temps d'exposition maximal, comme par exemple 1000 µs. En effet, au-delà du temps d'exposition maximal, le temps pour effectuer la mesure est trop long pour avoir suffisamment de précision dans la détection.

Plus la puissance lumineuse d'un faisceau lumineux résultant s'approche de 0,2 µW, tout en restant supérieure à 0,2 µW, et plus le temps d'exposition est élevé, afin que le détecteur optique 131 puisse détecter correctement la distribution d'intensité lumineuse spécifique du faisceau lumineux résultant.

Si la puissance lumineuse du faisceau lumineux résultant est inférieure à 0,2 µW, alors il devient difficile de calibrer le détecteur optique 131 de façon convenable pour permettre une bonne détection de la distribution d'intensité lumineuse spécifique du faisceau lumineux résultant. En effet, le temps d'exposition permettant au capteur optique 131 de capter le faisceau lumineux résultant devient alors supérieur au temps d'exposition maximal, en particulier, le temps d'exposition devient supérieur à 1000 µs.

Selon une possibilité remarquable de l'invention, les niveaux de gris Ng°, Ng¹ & Ng² sont codés en 8 bits, et ont donc une valeur pouvant varier de 0 à 255. Par exemple, Ng° = 150; Ng¹= 140; Ng² = 160.

Par référence à cette"*1^{ère} méthode de calibration du détecteur optique par référence à la tache lumineuse ayant le plus haut niveau de gris"*, un autre objet de l'invention concerne un 1^{er} mode de mise en oeuvre, avantageusement par ordinateur, d'un procédé d'analyse d'un analyte présent dans un fluide au moyen du dispositif selon l'invention. Ce 1^{er} mode est caractérisé en ce qu'il comporte la 1^{ère} méthode de calibration du détecteur optique.

Ce 1^{er} mode de mise en oeuvre, par ordinateur, du procédé d'analyse est implémentable par un système comprenant le dispositif selon l'invention et une unité centrale informatique de commande du dispositif, formant de préférence partie intégrante du dispositif (*"firmware"*)*.*

### 2^{e} méthode de calibration pour tenir compte de la qualité de l'alignement entre la source de lumière 130 et l'entrée de lumière 135 du guide de lumière 13

La puissance lumineuse utile, incidente sur la surface du détecteur optique, dépend notamment de la qualité de l'alignement de la source de lumière avec l'entrée du guide de lumière.

La 2^{e} méthode de calibration suivant l'invention, est une calibration du temps d'exposition du détecteur optique 131, pour, le cas échéant, corriger la mesure du faisceau lumineux résultant, en fonction de l'alignement/désalignement entre la source de lumière et l'entrée du guide de lumière, notamment suite un remplacement du capteur dans le dispositif selon l'invention.

Cette calibration est avantageusement faite avant la première détection, mais peut, de préférence, servir ensuite pour toutes les acquisitions du capteur. La calibration peut aussi être rappelé à tout moment par automatisme ou par l'utilisateur, pour ajuster les valeurs de sortie.

En d'autres termes, cette 2^{ème} méthode de calibration, avantageusement mise en oeuvre par ordinateur, au moins lors de la première détection, consiste essentiellement à:
(i.2) à identifier la tache lumineuse ayant le niveau de gris le plus élevé, sur la matrice de distributions (points) faite de taches lumineuses en niveaux de gris, contenues dans une image se formant dans le détecteur optique, ;
(ii.2) à prendre pour référence cette tache lumineuse;
(iii.2) à ajuster le temps d'exposition du détecteur optique, c'est-à-dire la durée pendant laquelle le détecteur optique effectue la mesure des distributions d'intensité lumineuse spécifique, de telle sorte que la tache lumineuse référente ait un niveau de gris Ng au moins égal à un niveau de gris prédéterminé Ng^{max}, correspondant à la borne supérieure d'une plage de niveaux de gris [Ng¹⁰; Ng²⁰];
(iv.2) et, quand Ng = Ng^{max}, à répéter plusieurs fois la même détection, c'est-à-dire la même mesure, pour obtenir plusieurs matrices de distributions (points) d'intensité lumineuse, inscrites dans (x) images;
(v.2) à mesurer Ng dans chacune de ces (x) images;
(vi.2) si Ng = Ng^{max}= Ng^{x}, dans tout ou partie de ces (x) images, de préférence dans toutes ces (x) images, alors le temps d'exposition correspondant est sauvegardé pour les mesures à suivre.

La présente invention a ainsi pour autre objet un dispositif électronique d'analyse d'un analyte présent dans un fluide, ledit dispositif étant équipé de moyens permettant que s'opère cette 2^{ème} méthode de calibration, au cours de l'analyse.

Cette 2^{e} méthode de calibration permet, en particulier au travers de son étape (iv.2) de lisser les éventuelles variations dues au bruit sur plusieurs images.

Avantageusement, (x) est compris entre 1 et 30, de préférence entre 2 et 20 .

Avantageusement, le temps d'exposition est compris entre 25 et 10.000 µs, de préférence entre 500 et 5.000 µs.

Avantageusement, [Ng¹⁰ ; Ng²⁰] est défini comme suit [16 ;150].

Par référence à cette 2^{ème} méthode de calibration, pour tenir compte de la qualité de l'alignement entre la source de lumière 130 et l'entrée de lumière 135 du guide de lumière 13", un autre objet de l'invention concerne un 2^{ème} mode de mise en oeuvre, avantageusement par ordinateur, d'un procédé d'analyse d'un analyte présent dans un fluide au moyen du dispositif selon l'invention. Ce 2^{ème} mode est caractérisé en ce qu'il comporte la 2^{ème} méthode de calibration du détecteur optique.

Ce 2^{ème} mode de mise en oeuvre, par ordinateur, du procédé d'analyse est implémentable par un système comprenant le dispositif selon l'invention et une unité centrale informatique de commande du dispositif, formant de préférence partie intégrante du dispositif (*"firmware"*)*.*

### 3^{e} méthode de calibration pour localiser les distributions (points) d'intensité lumineuse émis par le guide de lumière 13

L'amélioration des performances du dispositif selon l'invention passe par cette localisation des distributions (points) d'intensité lumineuse émis par le guide de lumière 13, dans une matrice de distributions (points) d'intensité lumineuse spécifiques, inscrites dans une image se formant dans le détecteur optique. Cette localisation permet au système de construire correctement les signaux analytiques mesurés (*e.g*. odeurs), à partir d'une information fiable, fidèle à la réalité des analytes mesurés.

Cette calibration est avantageusement faite avant la première détection, mais peut, de préférence, servir ensuite pour toutes les acquisitions du capteur. La calibration peut aussi être rappelé à tout moment par automatisme ou par l'utilisateur, pour ajuster les valeurs de sortie.

Cette 3^{ème} méthode de calibration, avantageusement mise en oeuvre par ordinateur, au moins lors de la première détection, consiste essentiellement à:
(i.3) à identifier et localiser chaque tache lumineuse constituant la matrice des distributions (points) de l'image qui se forme dans le détecteur optique, de préférence dans une image de forme rectangulaire, par l'intermédiaire du centre de la tache lumineuse, dans un repère XY orthonormé dont l'origine est un point donné de l'image, de préférence l'un des coins de l'image lorsque cette dernière est rectangulaire, la matrice étant ainsi constituée de Xⁿ lignes de Y^{m} taches lumineuses;
(ii.3) à identifier la tache lumineuse T^{I} la plus lumineuse de l'image, dans une ligne X^{n=b*} ;
(iii.3) à tracer une ligne de balayage passant, d'une part, par le centre de cette tache la plus lumineuse et, étant d'autre part, parallèle à l'axe Y ;
(iv.3) à faire effectuer, à cette ligne de balayage, un balayage angulaire, par rotation autour du centre de la tache la plus lumineuse, selon un angle + alpha / - alpha, formant un secteur angulaire comprenant une parallèle à l'axe Y ;
(v.3) à relever l'angle de rotation (alpha C) dans lequel la ligne de balayage coupe Y^{m-1} taches lumineuses de la ligne x^{n=b*};
(vi.3) pour chacune de Xⁿ⁻¹ lignes de Y^{m} taches lumineuses,
****(vi.3.1) à identifier la tache lumineuse la plus lumineuse de la ligne, dans une ligne X^{n≠b*},
****(vi.3.2) à tracer une ligne de balayage passant, d'une part, par le centre de cette tache la plus lumineuse et, étant d'autre part, parallèle à l'axe Y,
****(vi.3.3) à faire effectuer, à cette ligne de balayage, un balayage angulaire, par rotation autour du centre de la tache la plus lumineuse, selon l'angle (alpha C), pour trouver la ligne coupant Y^{m-1} taches lumineuses de la ligne X^{n≠b*}, et plus précisément pour trouver ces Y^{m-1} taches lumineuses de la ligne X^{n≠b*};
(vii.3) relever les coordonnées (X,Y) des [Xⁿ x Y^{m}] taches lumineuses constituant la matrice inscrite dans l'image se formant dans le détecteur optique;
(viii.3) à stocker en mémoire ces coordonnées;
(ix.3) et à utiliser ces coordonnées pour la lecture des faisceaux lumineux résultants dans le cadre du procédé selon l'invention d'analyse d'un analyte présent dans un fluide, au moyen du dispositif selon l'invention.

La présente invention a ainsi pour autre objet un dispositif électronique d'analyse d'un analyte présent dans un fluide, ledit dispositif étant équipé de moyens permettant que s'opère cette 3^{ème} méthode de calibration, au cours de l'analyse.

Avantageusement, l'angle |alpha| (en degrés) est compris entre 1 et 10, de préférence entre 2 et 8, et, plus préférentiellement encore entre 3 et 7.

La figure 14 annexée illustre cette 3^{e} méthode de calibration. On observe sur cette figure, la matrice 200 incluse dans l'image 201 rectangulaire. La matrice 200 est formée par les taches lumineuses 202. La tache lumineuse la plus lumineuse est noté 202*. Cette figure 14 montre également l'angle alpha de balayage.

Dans une variante avantageuse de cette 3^{e} méthode de calibration, où l'image est de forme rectangulaire et comporte un cadre définissant sa périphérie, il est prévu une procédure complémentaire comprenant les étapes essentielles suivantes :
(i^{c}.3) on balaye l'image selon une direction formant un angle bêta avec l'axe X ou Y, à partir d'au moins l'un des coins du cadre de cette image, de préférence au moins les 2 coins diagonalement opposés de l'image, et, plus préférentiellement encore le coin inférieur droit et le coin inférieur gauche de cette image;
(ii^{c}.3) une fois qu'est détectée, lors du balayage, une puissance/valeur lumineuse supérieure ou égale à P°, ladite puissance/valeur est attribuée à la tache lumineuse correspondant au coin de l'image et on identifie comme telle la tache lumineuse concernée.

Avantageusement, l'angle |bêta| (en degrés) est compris entre 30 et 80, de préférence entre 40 et 50, et, plus préférentiellement encore de l'ordre de 45.

La figure 15 annexée illustre cette variante de 3^{e} méthode de calibration. On observe sur cette figure la matrice 200 incluse dans une image 201 rectangulaire. La matrice image 200 est formée par les taches lumineuses 202. Les lignes de balayage 203 & 204, qui partent respectivement du coin supérieur droit et du coin inférieur gauche de l'image 201, forme un angle de 45° avec l'axe X et l'axe Y.

Les figures 16 et 17 montrent respectivement, d'une part, une matrice/image 200 non calibrée, et, d'autre part, une matrice 200 calibrée selon les 1^{er}, 2^{ème} & 3^{ème} méthodes selon l'invention décrites ci-dessus.

Par référence à cette 3^{ème} méthode de calibration_pour localiser les distributions (points) d'intensité lumineuse émis par le guide de lumière 13, un autre objet de l'invention concerne un 3^{ème} mode de mise en oeuvre, avantageusement par ordinateur, d'un procédé d'analyse d'un analyte présent dans un fluide au moyen du dispositif selon l'invention, tel que décrit dans le présent exposé. Ce 3^{ème} mode est caractérisé en ce qu'il comporte la 3^{ème} méthode de calibration du détecteur optique.

Ce 3^{ème} mode de mise en oeuvre, par ordinateur, du procédé d'analyse est implémentable par un système comprenant le dispositif selon l'invention et une unité centrale informatique de commande du dispositif, formant de préférence partie intégrante du dispositif ("firmware").

Au cours de la détection, l'analyte 2 est introduit dans la chambre de mesure 11 par l'ouverture d'admission 16a, puis est évacué de la chambre de mesure 11 par l'ouverture d'évacuation 16b. Ainsi, l'analyte 2 circule dans la chambre de mesure 11. L'interaction entre les récepteurs 14 et l'analyte 2 évolue donc au cours du temps. Les interférences formées dans le faisceau lumineux résultant de chaque branche 137 évoluent également au cours du temps, ce qui implique que la distribution d'intensité lumineuse spécifique du faisceau lumineux résultant de chaque branche 137 évolue au cours du temps. Le niveau de gris de chaque tache lumineuse 1314a, 1314b, 1314c varie donc au cours du temps.

Pour chaque faisceau lumineux résultant, et donc pour les première, deuxième et la troisième parties de chaque faisceau lumineux résultant, cette variation de niveau de gris est transformée en un signal électronique par le détecteur optique 131. L'ensemble des signaux électroniques générés forment alors un signal électronique multidimensionnel 31. Un exemple de signal électronique multidimensionnel 31 généré par le détecteur optique 131 est présenté à la figure 13.

Les signaux électroniques expriment le retard de phase du faisceau lumineux guidé dans le bras de mesure 133 par rapport au faisceau lumineux guidé dans le bras de référence 132 pour chaque branche 137, et donc expriment le changement d'indice optique dans le bras de mesure 133, c'est à dire l'interaction entre l'analyte 2 et les récepteurs temporaires 14. Ainsi, grâce à la source de lumière 130, au guide optique 13 et au détecteur optique 131, il est possible de détecter le changement d'indice optique généré par l'interaction entre l'analyte 2 et les récepteurs 14, et donc de détecter la présence de l'analyte 2 dans le fluide analysé.

Sur la figure 13 sont représentés les signaux électroniques S1, S2, S3 correspondant à un faisceau lumineux résultant. On observe ainsi trois courbes qui représentent respectivement la variation du niveau de gris de la tache lumineuse 1314a de la première partie du faisceau lumineux résultant au cours du temps, la variation du niveau de gris de la tache lumineuse 1314b de la deuxième partie du faisceau lumineux résultant au cours du temps, et la variation du niveau de gris de la tache lumineuse 1314c de la troisième partie du faisceau lumineux résultant au cours du temps.

Pendant la période de temps Tb, un fluide de référence connu est introduit dans la chambre de mesure 11. Le signal électronique multidimensionnel 31 présente une valeur de référence. Pendant la période de temps Ti, le fluide à analyser est introduit dans le chambre de mesure 11. On observe alors une modification du signal électrique multidimensionnel 31. Cette modification est caractéristique de l'interaction entre l'analyte 2 et les récepteurs 14. Pendant la période Tp, le fluide de référence 'est à nouveau introduit dans la chambre de mesure. Le signal électronique multidimensionnel 31 est alors modifié jusqu'à ce qu'il retrouve sa valeur de référence. Cette période de temps Tp permet de purger la chambre de mesure 11 et permet à l'analyte 2 ayant interagi avec les récepteurs 14 de sortir également de la chambre de mesure 11. A la fin de la période Tp, la chambre de mesure 11 est alors prête à recevoir un nouveau fluide à analyser et les récepteurs 14 sont alors prêts à recevoir l'analyte 2 du nouveau fluide à analyser.

Toutefois, il peut arriver qu'une partie de l'analyte 2 du fluide analysé reste sur les récepteurs 14 temporaires. Le signal électronique multidimensionnel ne revient alors pas exactement à sa valeur de référence, mais à une valeur proche de cette valeur de référence. Si cette valeur est trop éloignée de la valeur de référence, alors les récepteurs 14 temporaires doivent être changés. Le capteur 10 doit être remplacé.

Par exemple, les récepteurs 14 temporaires peuvent être testés avant toute utilisation, dans l'air ambiant. On obtient alors une valeur initiale de référence pour le signal électronique multidimensionnel 31. Si lors de la période Tp, la valeur du signal électronique multidimensionnel 31 prend une valeur avec un écart inférieur à 10% par rapport à la valeur initiale de référence, alors, les récepteurs 14 temporaires peuvent être conservés, et le capteur 10 peut être gardé.

Au contraire, si lors de la période de temps Tp, la valeur du signal électronique multidimensionnel 31 prend une valeur avec un écart supérieur à 10% par rapport à la valeur initiale de référence, alors les récepteurs 14 temporaires doivent être changés, et le capteur 10 ou le dispositif électronique d'analyse 1 doit être remplacé.

Dans le premier et le second mode de réalisation, décrits ci-dessus et montrés aux figures 9 & 11, du dispositif selon l'invention, la puce photonique 12 présente, à sa surface supérieure fonctionnalisée, en regard de la chambre de mesure 11, le guide de lumière 13 et les récepteurs 14 destinés à réagir avec les analytes 2. Le capot 15 définissant la chambre de mesure 11 ainsi que l'élément de fermeture 60 traversé par le contenu d'admission 57a et le conduit d'évacuation 57b, sont disposées au-dessus de la puce photonique 12 et en particulier de sa surface supérieure active.

Selon une variante de réalisation du dispositif selon l'invention montrée sur la figure 18, le capot 150 définissant la chambre de mesure 110, est disposé en-dessous de la puce photonique 120 et, en particulier, en dessous de sa surface inférieure fonctionnalisée 121, qui est en regard de la chambre de mesure 110.

Avantageusement, l'élément de fermeture 600, peut lui aussi être disposé en-dessous de la puce photonique 120 et, en particulier, en dessous de sa surface inférieure fonctionnalisée 121.

La surface 121 comporte le guide de lumière 130 et les récepteurs 140 destinés à réagir avec les analytes 200 (non visibles sur la figure 18).

L'élément de fermeture 600 est constitué d'une pièce inférieure 630 traversée par le contenu d'admission 570a et le conduit d'évacuation 570b et d'une pièce supérieure 620. Les pièces inférieures 630 et supérieures 620 sont reliées l'une à l'autre par une charnière 640, non représentée sur la figure 18.

Cette variante de réalisation du dispositif selon l'invention, offre l'avantage que les souillures éventuelles 700 présentes dans la chambre de mesure 110, reposent plutôt, du fait de la gravité, sur le fond de la chambre de mesure 110. Ce fond est formé par la base du capot 150.

Cette modalité avantageuse limite les risques de pollution, ce qui est particulièrement positif pour la fiabilité des mesures et pour l'augmentation de la durée de vie de la puce photonique.

Les références numériques de cette figure 18 désignent des éléments analogues aux éléments des 2 premiers modes de réalisation du dispositif, repérés par les mêmes références numériques multipliées par 10.

## Revendications

1. Dispositif électronique d'analyse (1) d'un analyte (2) présent dans un fluide **caractérisé en ce qu'**il comprend:
- un capteur (10) consommable et interchangeable comportant
i) une puce photonique (12) comprenant au moins une chambre de mesure (11) comportant un guide de lumière (13) dans lequel sont disposés des récepteurs (14) temporaires aptes à avoir une interaction avec l'analyte présent dans le fluide, l'interaction provoquant un changement de propriété locale, le guide de lumière (13) comportant une entrée de lumière (135) et une sortie de lumière (136) et
ii) un capot (15) solidarisé à la puce photonique et comprenant une ouverture (16a, 16b) adaptée pour admettre le fluide dans la chambre de mesure et pour évacuer le fluide de la chambre de mesure ;
- un support de capteur (50) comportant un logement (51) dans lequel le capteur est destiné à être mis en place de manière réversible ;
- un élément de fermeture (60) coopérant avec le support de capteur pour encapsuler le capteur ;
- un transducteur de changement de propriété locale provoqué par l'interaction entre les récepteurs et l'analyte apte à convertir le changement de propriété locale en un signal électronique exprimant le changement de propriété locale, ce transducteur comportant :
- une source de lumière (130) cohérente, d'une part, apte à émettre un faisceau lumineux (129) cohérent dans le guide de lumière de la puce photonique, et, d'autre part, positionnée sur le capot du capteur ou sur l'élément de fermeture;
- un détecteur optique (131) agencé en regard de la sortie de lumière du guide de lumière et apte à mesurer un paramètre optique du faisceau lumineux dépendant du changement de propriété locale, à la sortie du guide de lumière.

2. Dispositif selon la revendication 1, dans lequel le guide de lumière (13) comprend au moins une branche (137) comportant un bras de référence (132) dans lequel une partie du faisceau lumineux émis par la source de lumière est destiné à être guidé par réflexion interne totale, et un bras de mesure (133) dans lequel une autre partie du faisceau lumineux émis par la source de lumière est destiné à être guidé par réflexion interne totale et dans lequel sont disposés les récepteurs (14), le bras de référence (132) et le bras de mesure (133) étant recombinés en un bras d'interférence (134) dans lequel un faisceau lumineux résultant issu de la recombinaison de la partie du faisceau lumineux guidé dans le bras de référence et de l'autre partie du faisceau lumineux guidé dans le bras de mesure est destiné à être guidé, et
dans lequel la puissance lumineuse du faisceau lumineux résultant guidé dans le bras d'interférence (134) est supérieure ou égale à 0,2 µW.

3. Dispositif selon la revendication 2, dans lequel les faisceaux lumineux résultant qui sont issus des bras d'interférence des branches, ces bras d'interférence étant éventuellement au moins une fois divisés en sous-bras, produisent une matrice de distributions (points) d'intensité lumineuse spécifiques (ci-après dénommées "distributions"), dans le détecteur optique, chaque distribution étant de préférence représentée par une tache lumineuse en niveau de gris.

4. Dispositif selon l'une des revendications 1 à 3, dans lequel la source de lumière est positionnée sur le capot du capteur et comprenant
- des pistes électroniques (128) gravées sur le capot sur lesquelles est disposée la source de lumière,
- un circuit électronique (127) sur l'élément de fermeture, et
- un contacteur électrique (126) permettant de connecter les pistes électroniques au circuit électronique pour alimenter la source de lumière.

5. Dispositif selon l'une des revendications 1 à 4, dans lequel la source de lumière est positionnée sur l'élément de fermeture, et comprenant un système optique, qui comporte de préférence au moins une lentille, et qui est destiné à collimater le faisceau lumineux.

6. Dispositif selon l'une des revendications 1 à 5, dans lequel le capteur comprend une protection des récepteurs temporaires configurée pour être active avant la mise en place du capteur dans le logement du support de capteur et être désactivée par la mise en place du capteur dans le logement du support de capteur.

7. Dispositif selon l'une des revendications 1 à 3, dans lequel le capot 150 définissant la chambre de mesure 110 est disposé en-dessous de la puce photonique 120 et, en particulier, en dessous de sa surface inférieure fonctionnalisée 121,qui est en regard de la chambre de mesure 110.

8. Dispositif selon au moins l'une des revendications 3 à 7 équipé de moyens permettant que s'opère une 1^{ère} méthode de calibration, avantageusement mise en oeuvre par ordinateur, au moins lors de la première détection, cette 1^{ère} méthode consistant essentiellement à:
(i.1) à identifier la tache lumineuse ayant le niveau de gris le plus élevé, sur la matrice de distributions (points) faite de taches lumineuses en niveaux de gris, contenues dans une image se formant dans le détecteur optique;
(ii.1) à prendre pour référence cette tache lumineuse;
(iii.1) à ajuster le temps d'exposition du détecteur optique, c'est-à-dire la durée pendant laquelle le détecteur optique effectue la mesure des distributions d'intensité lumineuse spécifique, de telle sorte que la tache lumineuse référente ait un niveau de gris Ng au moins égal à un niveau de gris prédéterminé Ng°, ou compris dans une plage de niveau de gris [Ng¹ - Ng²].

9. Dispositif selon au moins l'une des revendications 3 à 8 équipé de moyens permettant que s'opère une 2^{ème} méthode de calibration, avantageusement mise en oeuvre par ordinateur, au moins lors de la première détection, cette 2^{e} méthode consistant essentiellement à:
(i.2) à identifier la tache lumineuse ayant le niveau de gris le plus élevé, sur la matrice de distributions (points) faite de taches lumineuses en niveaux de gris, contenues dans une image se formant dans le détecteur optique, ;
(ii.2) à prendre pour référence cette tache lumineuse;
(iii.2) à ajuster le temps d'exposition du détecteur optique, c'est-à-dire la durée pendant laquelle le détecteur optique effectue la mesure des distributions d'intensité lumineuse spécifique, de telle sorte que la tache lumineuse référente ait un niveau de gris Ng au moins égal à un niveau de gris prédéterminé Ng^{max}, correspondant à la borne supérieure d'une plage de niveau de gris [Ng¹⁰ - Ng²⁰];
(iv.2) et, quand Ng = Ng^{max}, à répéter plusieurs fois la même détection, c'est-à-dire la même mesure, pour obtenir plusieurs matrices de distributions (points) d'intensité lumineuse, contenues dans (x) images;
(v.2) à mesurer Ng dans chacune de ces (x) images;
(vi.2) si Ng = Ng^{max}= Ng^{x}, dans ces (x) images, alors le temps d'exposition correspondant est sauvegardé pour les mesures à suivre.

10. Dispositif selon au moins l'une des revendications 3 à 9 équipé de moyens permettant que s'opère une 3^{ème} méthode de calibration, avantageusement mise en œuvre par ordinateur, au moins lors de la première détection, cette 3^{ème} méthode consistant essentiellement à:
(i.3) à identifier et localiser chaque tache lumineuse constituant la matrice inscrite dans une image, de préférence rectangulaire se formant dans le détecteur optique, par l'intermédiaire du centre de la tache lumineuse, dans un repère XY orthonormé dont l'origine est un point donné de l'image, de préférence l'un des coins de l'image lorsque cette dernière est rectangulaire, la matrice étant ainsi constituée de Xⁿ lignes de Y^{m} taches lumineuses;
(ii.3) à identifier la tache lumineuse T^{I} la plus lumineuse de l'image, dans une ligne X^{n=b*} ;
(iii.3) à tracer une ligne de balayage passant, d'une part, par le centre de cette tache la plus lumineuse et, étant d'autre part, parallèle à l'axe Y dans une image de forme rectangulaire ;
(iv.3) à faire effectuer, à cette ligne de balayage, un balayage angulaire, par rotation autour du centre de la tache la plus lumineuse, selon un angle + alpha / - alpha, formant un secteur angulaire comprenant une parallèle à l'axe Y ;
(v.3) à relever l'angle de rotation (alpha C) dans lequel la ligne de balayage coupe Y^{m-1} taches lumineuses de la ligne x^{n=b*};
(vi.3) pour chacune de Xⁿ⁻¹ lignes de Y^{m} taches lumineuses,
_(vi.3.1) à identifier la tache lumineuse la plus lumineuse de la ligne, dans une ligne x^{n≠b*}, _(vi.3.2) à tracer une ligne de balayage passant, d'une part, par le centre de cette tache la plus lumineuse et, étant d'autre part, parallèle à l'axe Y dans une image de forme rectangulaire,
_(vi.3.3) à faire effectuer, à cette ligne de balayage, un balayage angulaire, par rotation autour du centre de la tache la plus lumineuse, selon l'angle (alpha C), pour trouver la ligne coupant Y^{m-1} taches lumineuses de la ligne X^{n≠b*}, et plus précisément pour trouver ces Y^{m-1} taches lumineuses de la ligne X^{n≠b*};
(vii.3) relever les coordonnées (X,Y) des [Xⁿ x Y^{m}] taches lumineuses constituant la matrice, et contenues dans l'image se formant dans le détecteur optique;
(viii.3) à stocker en mémoire ces coordonnées;
(ix.3) et à utiliser ces coordonnées pour la lecture des faisceaux lumineux résultants dans le cadre du procédé selon l'invention d'analyse d'un analyte présent dans un fluide, au moyen du dispositif selon l'invention.

11. Procédé d'analyse d'un analyte présent dans un fluide au moyen du dispositif selon l'une au moins des revendications 1 à 10 **caractérisé en ce qu'**il comporte, dans un premier mode de mise en oeuvre, avantageusement par ordinateur, la 1^{ère} méthode de calibration du détecteur optique telle que définie dans la revendication 8.

12. Procédé d'analyse d'un analyte présent dans un fluide au moyen du dispositif selon l'une au moins des revendications 1 à 10 **caractérisé en ce qu'**il comporte, dans un deuxième mode de mise en oeuvre, avantageusement par ordinateur, la 2^{ème} méthode de calibration du détecteur optique telle que définie dans la revendication 9.

13. Procédé d'analyse d'un analyte présent dans un fluide au moyen du dispositif selon l'une au moins des revendications 1 à 10 **caractérisé en ce qu'**il comporte, dans un troisième mode de mise en œuvre, avantageusement par ordinateur, la 3^{ème} méthode de calibration du détecteur optique telle que définie dans la revendication 10.

14. Procédé de remplacement d'un capteur (10) d'un dispositif électronique d'analyse (1) selon l'une des revendications 1 à 10, dans lequel
- le capteur est retiré du logement du support de capteur,
- un nouveau capteur est positionné dans le logement du support de capteur.

## Patentansprüche

1. Elektronische Vorrichtung (1) zur Analyse eines in einer Flüssigkeit vorhandenen Analyten (2), **dadurch gekennzeichnet, dass** sie umfasst:
- einen verbrauchbaren und austauschbaren Sensor (10) umfassend
i) einen photonischen Chip (12), welcher wenigstens eine Messkammer (11) umfasst, welche eine Lichtführung (13) umfasst, in welcher temporäre Empfänger (14) angeordnet sind, welche in der Lage sind, mit dem in der Flüssigkeit vorhandenen Analyten zu interagieren, wobei die Interaktion eine lokale Eigenschaftsänderung bewirkt, wobei die Lichtführung (13) einen Lichteintritt (135) und einen Lichtaustritt (136) aufweist, und
ii) eine Abdeckung (15), welche mit dem photonischen Chip verbunden ist und eine Öffnung (16a, 16b) umfasst, welche dazu ausgelegt ist, Flüssigkeit in die Messkammer einzuleiten und Flüssigkeit aus der Messkammer abzuführen;
- einen Sensorhalter (50), welcher ein Gehäuse (51) umfasst, in welches der Sensor in einer reversiblen Weise eingesetzt werden kann;
- ein Verschlusselement (60), welches mit dem Sensorhalter zusammenwirkt, um den Sensor zu kapseln;
- einen lokalen Eigenschaftsänderungswandler, wobei die Änderung durch die Wechselwirkung zwischen den Rezeptoren und dem Analyten verursacht ist, welcher in der Lage ist, die lokale Eigenschaftsänderung in ein elektronisches Signal umzuwandeln, welches die lokale Eigenschaftsänderung ausdrückt, wobei dieser Wandler umfasst:
- eine kohärente Lichtquelle (130), welche einerseits in der Lage ist, einen kohärenten Lichtstrahl (129) in der Lichtführung des photonischen Chips zu emittieren, und andererseits auf der Abdeckung des Sensors oder auf dem Verschlusselement positioniert ist;
- einen optischen Detektor (131), welcher dem Lichtaustritt der Lichtführung zugewandt angeordnet ist und in der Lage ist, einen optischen Parameter des Lichtstrahls gemäß der lokalen Eigenschaftsänderung an dem Austritt der Lichtführung zu messen.

2. Vorrichtung nach Anspruch 1, wobei die Lichtführung (13) wenigstens einen Zweig (137) umfasst, welcher einen Referenzarm (132), in welchem ein Teil des von der Lichtquelle emittierten Lichtstrahls durch Totalreflexion geführt werden soll, und einen Messarm (133) umfasst, in welchem ein anderer Teil des von der Lichtquelle emittierten Lichtstrahls durch Totalreflexion geführt werden soll und in welchem die Empfänger (14) angeordnet sind, wobei der Referenzarm (132) und der Messarm (133) zu einem Interferenzarm (134) rekombiniert sind, in welchem ein resultierender Lichtstrahl, welcher aus der Rekombination des in den Referenzarm geleiteten Teils des Lichtstrahls und des anderen Teils des in den Messarm geleiteten Lichtstrahls entsteht, geführt werden soll, und in welchem die Lichtleistung des resultierenden Lichtstrahls, welcher in dem Interferenzarm (134) geführt wird, größer oder gleich 0,2 µW ist.

3. Vorrichtung nach Anspruch 2, wobei die resultierenden Lichtstrahlen, welche von den Interferenzarmen der Zweige ausgehen, wobei diese Interferenzarme gegebenenfalls wenigstens einmal in Unterarme unterteilt sind, eine Matrix spezifischer Lichtintensitätsverteilungen (Punkte) (im Folgenden als "Verteilungen" bezeichnet) in dem optischen Detektor erzeugen, wobei jede Verteilung vorzugsweise durch einen graustufigen Lichtfleck dargestellt wird.

4. Vorrichtung nach einem der Ansprüche 1 bis 3, wobei die Lichtquelle auf der Abdeckung des Sensors positioniert ist und umfasst
- elektronische Leiterbahnen (128), welche auf der Abdeckung eingraviert sind, auf welchen die Lichtquelle angeordnet ist,
- eine elektronische Schaltung (127) auf dem Verschlusselement und
- einen elektrischen Schalter (126), welcher ermöglicht, dass die elektronischen Leiterbahnen mit der elektronischen Schaltung verbunden sind, um die Lichtquelle mit Strom zu versorgen.

5. Vorrichtung nach einem der Ansprüche 1 bis 4, wobei die Lichtquelle auf dem Verschlusselement positioniert ist und ein optisches System umfasst, welches vorzugsweise wenigstens eine Linse umfasst und dazu bestimmt ist, den Lichtstrahl zu kollimieren.

6. Vorrichtung nach einem der Ansprüche 1 bis 5, wobei der Sensor einen Schutz für temporäre Empfänger umfasst, welcher dazu eingerichtet ist, vor dem Einsetzen des Sensors in die Aufnahme des Sensorhalters aktiv zu werden und durch das Einsetzen des Sensors in die Aufnahme des Sensorhalters deaktiviert zu werden.

7. Vorrichtung nach einem der Ansprüche 1 bis 3, wobei die die Messkammer 110 definierende Abdeckung 150 unterhalb des photonischen Chips 120 und insbesondere unterhalb seiner funktionalisierten Unterseite 121 angeordnet ist, welche der Messkammer 110 zugewandt ist.

8. Vorrichtung nach wenigstens einem der Ansprüche 3 bis 7, welche mit Mitteln ausgestattet ist, welche das Ausführen eines 1. Kalibrierungsverfahren ermöglichen, welches vorzugsweise durch einen Computer implementiert ist, wenigstens während der ersten Erfassung, wobei dieses 1. Verfahren im Wesentlichen besteht, aus:
(i.1) Identifizieren des Lichtflecks mit dem höchsten Grauwert auf der Matrix der Verteilungen (Punkte) aus Lichtflecken in Graustufen, welche in einem in dem optischen Detektor entstehenden Bild enthalten sind;
(ii.1) Nehmen dieses Lichtflecks als Referenz;
(iii.1) Anpassen der Belichtungszeit des optischen Detektors, d. h. die Dauer, während welcher der optische Detektor die Messung der spezifischen Lichtintensitätsverteilungen durchführt, derart, dass der Referenzlichtfleck einen Grauwert Ng aufweist, welcher wenigstens einem vorgegebenen Grauwert Ng° entspricht oder in einem Grauwertbereich [Ng¹ - Ng²] liegt.

9. Vorrichtung nach wenigstens einem der Ansprüche 3 bis 8, welche mit Mitteln ausgestattet ist, welche das Ausführen eines 2. Kalibrierungsverfahren ermöglichen, welches vorzugsweise durch einen Computer implementiert ist, wenigstens während der ersten Erfassung, wobei dieses 2. Verfahren im Wesentlichen besteht, aus:
(i.2) Identifizieren des Lichtflecks mit dem höchsten Grauwert auf der Matrix der Verteilungen (Punkte) aus Lichtflecken in Graustufen, welche in einem in dem optischen Detektor entstehenden Bild enthalten sind;
(ii.2) Nehmen dieses Lichtflecks als Referenz;
(iii.2) Anpassen der Belichtungszeit des optischen Detektors, d. h. die Dauer, während welcher der optische Detektor die Messung der spezifischen Lichtintensitätsverteilungen durchführt, derart, dass der Referenzlichtfleck einen Grauwert Ng aufweist, welcher wenigstens einem vorgegebenen Grauwert Ng^{max} entspricht, welcher der Obergrenze eines Grauwertbereichs [Ng¹⁰ - Ng²⁰] entspricht;
(iv.2) und, wenn Ng = Ng^{max}, mehrmaliges Wiederholen derselben Erfassung, d. h. derselben Messung, um mehrere Matrizen von Lichtintensitätsverteilungen (Punkten) zu erhalten, welche in (x) Bildern enthalten sind;
(v.2) Messen von Ng in jedem dieser (x) Bilder;
(vi.2) wenn Ng = Ng^{max} = Ng^{x} in diesen (x) Bildern, dann Speichern der entsprechenden Belichtungszeit für die folgenden Messungen.

10. Vorrichtung nach wenigstens einem der Ansprüche 3 bis 9, welche mit Mitteln ausgestattet ist, welche das Ausführen eines 3. Kalibrierungsverfahren ermöglichen, welches vorzugsweise durch einen Computer implementiert ist, wenigstens während der ersten Erfassung, wobei dieses 3. Verfahren im Wesentlichen besteht, aus:
(i.3) Identifizieren und Lokalisieren jedes Lichtflecks, welcher die in einem vorzugsweise rechteckigen Bild in dem optischen Detektor gebildete Matrix bildet, über den Mittelpunkt des Lichtflecks in einem orthonormierten XY-Koordinatensystem, dessen Ursprung ein bestimmter Punkt des Bildes ist, vorzugsweise eine der Ecken des Bildes, wenn dieses rechteckig ist, wobei die Matrix somit aus Xⁿ Zeilen von Y^{m} Lichtflecken besteht;
(ii.3) Identifizieren des hellsten Lichtflecks T^{I} des Bildes in einer Zeile X^{n = b*};
(iii.3) Zeichnen einer Abtastlinie, welche einerseits durch den Mittelpunkt dieses hellsten Flecks verläuft und andererseits parallel zu der Y-Achse in einem rechteckigen Bild ist;
(iv.3) Ausführen, an dieser Abtastlinie, einer Winkelabtastung durch Rotation um den Mittelpunkt des hellsten Flecks in einem +alpha / -alpha Winkel, welcher einen Winkelbereich bildet, welcher eine Parallele zu der Y-Achse umfasst;
(v.3) Erhalten des Rotationswinkels (alpha C), in welchem die Abtastlinie die Y^{m-1} Lichtflecken der Zeile X^{n = b*} schneidet;
(vi.3) für jede der Xⁿ⁻¹ Linien von Y^{m} Lichtflecken,
(vi.3.1) Identifizieren des hellsten Lichtflecks der Zeile in jeder Zeile X^{n ≠ b*},
(vi.3.2) Zeichnen einer Abtastlinie, welche einerseits durch den Mittelpunkt dieses hellsten Lichtflecks verläuft und andererseits parallel zu der Y-Achse in einem Bild ist, welches eine rechteckige Form aufweist,
(vi.3.3) Ausführen, an der Abtastlinie, einer Winkelabtastung durch Rotation um den Mittelpunkt des hellsten Flecks, gemäß dem Winkel (alpha C), um die Linie zu finden, welche Y^{m-1} Lichtflecken der Zeile X^{n ≠ b*} schneidet, und genauer gesagt, um diese Y^{m-1} Lichtflecken der Zeile X^{n ≠ b*} zu finden;
(vii.3) Erhalten der Koordinaten (X, Y) der [Xⁿ x Y^{m}] Lichtflecken, welche die Matrix bilden, und welche in dem Bild enthalten sind, welches sich in dem optischen Detektor bildet;
(viii.3) Speichern dieser Koordinaten;
(ix.3) und Verwenden dieser Koordinaten, um die resultierenden Lichtstrahlen in dem Rahmen des erfindungsgemäßen Verfahrens zur Analyse eines in einer Flüssigkeit vorhandenen Analyten zu lesen, mittels der erfindungsgemäßen Vorrichtung.

11. Verfahren zur Analyse eines in einer Flüssigkeit vorhandenen Analyten mittels der Vorrichtung nach wenigstens einem der Ansprüche 1 bis 10, **dadurch gekennzeichnet, dass** es in einem ersten Anwendungsmodus, vorzugsweise computergesteuert, das 1. Kalibrierungsverfahren für den optischen Detektor nach Anspruch 8 umfasst.

12. Verfahren zur Analyse eines in einer Flüssigkeit vorhandenen Analyten mittels der Vorrichtung nach wenigstens einem der Ansprüche 1 bis 10, **dadurch gekennzeichnet, dass** es in einem zweiten Anwendungsmodus, vorzugsweise computergesteuert, das 2. Kalibrierungsverfahren für den optischen Detektor nach Anspruch 9 umfasst.

13. Verfahren zur Analyse eines in einer Flüssigkeit vorhandenen Analyten mittels der Vorrichtung nach wenigstens einem der Ansprüche 1 bis 10, **dadurch gekennzeichnet, dass** es in einem dritten Anwendungsmodus, vorzugsweise computergesteuert, das 3. Kalibrierungsverfahren für den optischen Detektor nach Anspruch 10 umfasst.

14. Verfahren zum Austauschen eines Sensors (10) einer elektronischen Analysenvorrichtung (1) nach einem der Ansprüche 1 bis 10, bei welchem
- der Sensor aus der Aufnahme des Sensorhalters entfernt wird,
- ein neuer Sensor in die Aufnahme des Sensorhalters eingesetzt wird.

## Claims

1. An electronic device (1) for analyzing an analyte (2) present in a fluid, **characterized in that** it comprises:
- a consumable and interchangeable sensor (10) comprising
i) a photonic chip (12) comprising at least one measurement chamber (11) comprising a light guide (13) in which temporary receptors (14) capable of interacting with the analyte present in the fluid are arranged, the interaction causing a local property change, the light guide (13) comprising a light inlet (135) and a light outlet (136), and
ii) a cap (15) integral with the photonic chip and comprising an opening (16a, 16b) suitable for admitting fluid into the measurement chamber and for discharging fluid from the measurement chamber;
- a sensor support (50) comprising a housing (51) in which the sensor is intended to be placed in a reversible manner;
- a closing element (60) cooperating with the sensor support to encapsulate the sensor;
- a local property change transducer, the change being caused by the interaction between the receptors and the analyte, capable of converting the local property change into an electronic signal expressing the local property change, this transducer comprising:
- a coherent light source (130), on the one hand, capable of emitting a coherent light beam (129) into the light guide of the photonic chip, and, on the other hand, positioned on the cap of the sensor or on the closing element;
- an optical detector (131) arranged facing the light outlet of the light guide and capable of measuring an optical parameter of the light beam according to the local property change, at the outlet of the light guide.

2. The device according to claim 1, wherein the light guide (13) comprises at least one branch (137) comprising a reference arm (132) in which a part of the light beam emitted by the light source is intended to be guided by total internal reflection, and a measurement arm (133) in which another part of the light beam emitted by the light source is intended to be guided by total internal reflection and in which the receptors (14) are arranged, the reference arm (132) and the measurement arm (133) being recombined into an interference arm (134) into which a resulting light beam which results from recombining the part of the light beam guided into the reference arm and the other part of the light beam guided into the measurement arm is intended to be guided, and
wherein the radiant power of the resulting light beam guided into the interference arm (134) is equal to or greater than 0.2 µW.

3. The device according to claim 2, wherein the resulting light beams are issued from interference arms of the branches, these interference arms possibly being divided at least once into sub-arms, producing a matrix of specific light intensity distributions (points) (called "distributions" below), in the optical detector, each distribution preferably being represented by a light spot in grayscale.

4. The device according to any one of claims 1 to 3, wherein the light source is positioned on the cap of the sensor and comprising
- electronic traces (128) etched on the cap on which the light source is arranged,
- an electronic circuit (127) on the closing element, and
- an electric contactor (126) enabling the electronic traces to be connected to the electronic circuit in order to supply power to the light source.

5. The device according to one of claims 1 to 4, wherein the light source is positioned on the closing element, and comprising an optical system that preferably comprises at least one lens, which is intended to collimate the light beam.

6. The device according to one of claims 1 to 5, wherein the sensor comprises protection for the temporary receptors which is configured to be active before the sensor is placed into the housing of the sensor support and to be deactivated by the placement of the sensor into the housing of the sensor support.

7. The device according to one of claims 1 to 3, wherein the cap 150 defining the measurement chamber 110 is arranged below the photonic chip 120 and, in particular, below its functionally active lower surface 121, which faces the measurement chamber 110.

8. The device according to at least one of claims 3 to 7, equipped with means enabling a 1^{st} calibration method to be carried out, advantageously implemented by computer, at least during the first detection, this 1^{st} method essentially consisting of:
(i.1) identifying the light spot having the highest grayscale, on the matrix of distributions (points) made of light spots in grayscale, contained in an image that is formed in the optical detector;
(ii.1) taking this light spot as a reference;
(iii.1) adjusting the exposure time of the optical detector, i.e. the duration during which the optical detector measures the specific light intensity distributions, such that the referent light spot has a grayscale Ng at least equal to a predetermined grayscale Ng°, or included within a grayscale range [Ng¹- Ng²].

9. The device according to at least one of claims 3 to 8 equipped with means enabling a 2^{nd} calibration method to be carried out, advantageously implemented by computer, at least during the first detection, this 2^{nd} method essentially consisting of:
(i.2) identifying the light spot having the highest grayscale, in the matrix of distributions (points) made of light spots in grayscale, contained in an image that is formed in the optical detector;
(ii.2) taking this light spot as a reference;
(iii.2) adjusting the exposure time of the optical detector, i.e. the duration during which the optical detector measures the specific light intensity distributions, such that the referent light spot has a grayscale Ng at least equal to a predetermined grayscale Ng^{max}, corresponding to the upper limit of a grayscale range [Ng¹⁰-Ng²⁰];
(iv.2) and, when Ng = Ng^{max}, repeating the same detection, i.e. the same measurement, several times to obtain several matrices of light intensity distributions (points), contained in (x) images;
(v.2) measuring Ng in each of these (x) images;
(vi.2) if Ng = Ng^{max} = Ng^{x}, in these (x) images, then the corresponding exposure time is saved for the following measurements.

10. The device according to at least one of claims 3 to 9 equipped with means enabling a 3^{rd} calibration method to be carried out, advantageously implemented by computer, at least during the first detection, this 3^{rd} method essentially consisting of:
(i.3) identifying and locating each light spot constituting the matrix contained in an image, preferably rectangular, forming in the optical detector, by means of the center of the light spot, in a coordinate system XY of which the origin is a given point in the image, preferably one of the corners of the image when the image is rectangular, the matrix thus being composed of Xⁿ rows of Y^{m} light spots;
(ii.3) identifying the most luminous light spot T^{I} of the image, in a row x^{n=b*};
(iii.3) tracing a scan line passing through the center of this most luminous spot while also being parallel to the Y axis in an image having a rectangular shape;
(iv.3) carrying out, at this scan line, angular scanning by rotation around the center of the most luminous spot, according to an +alpha/-alpha angle, forming an angular sector comprising a line parallel to the Y axis;
(v.3) obtaining the angle of rotation (alpha C) in which the scan line intersects Y^{m-1} light spots of row X^{n≠b*} ;
(vi.3) for each of Xⁿ⁻¹ lines of Y ^{m} light spots,
_(vi.3.1) identifying the most luminous light spot of the row, in each row X^{n ≠b*}, _(vi.3.2) tracing a scan line passing through the center of this most luminous spot while also being parallel to the Y axis in an image having a rectangular shape,
_(vi.3.3) carrying out, at this scan line, angular scanning by rotation around the center of the most luminous spot, according to the angle (alpha C), in order to find the line intersecting Y^{m-1} light spots of row X^{n ≠b*}, and more specifically to find these Y^{m-1} light spots of row X^{n ≠b*};
(vii.3) obtaining the coordinates (X,Y) of [Xⁿ x Y^{m} ] light spots constituting the matrix, and that are contained in the image forming in the optical detector;
(viii.3) storing these coordinates in memory;
(ix.3) and using these coordinates to read the resulting light beams in the context of the method according to the invention of analyzing an analyte present in a fluid, by means of the device according to the invention.

11. A method of analyzing an analyte present in a fluid by means of the device according to at least one of claims 1 to 10, **characterized in that** the method comprises, in a first embodiment, advantageously implemented by computer, the 1^{st} calibration method for the optical detector as defined in claim 8.

12. A method of analyzing an analyte present in a fluid by means of the device according to at least one of claims 1 to 10, **characterized in that** the method comprises, in a second embodiment, advantageously implemented by computer, the 2^{nd} calibration method for the optical detector as defined in claim 9.

13. A method of analyzing an analyte present in a fluid by means of the device according to at least one of claims 1 to 10, **characterized in that** the method comprises, in a third embodiment, advantageously implemented by computer, the 3^{rd} calibration method for the optical detector as defined in claim 10.

14. A method of replacing a sensor (10) of an electronic analysis device (1) according to one of claims 1 to 10, wherein
- the sensor is removed from the housing of the sensor support,
- a new sensor is positioned in the housing of the sensor support.
